# EUROPEAN PATENT APPLICATION

(11) **EP 4 480 976 A1**
(43) Date of publication of application: **25.12.2024**
(21) Application number: 23756125.3
(22) Date of filing: 26.01.2023
(51) Int. Cl.: C08F 290/00, C08F 12/00, C08F 290/04

(54) **HOLLOW RESIN PARTICLES, METHOD FOR PRODUCING SAME, AND USE THEREOF**

(30) Priority: 18.02.2022 JP 2022023680; 29.03.2022 JP 2022053673
(71) Applicant: Sekisui Kasei Co., Ltd., Kita-ku Osaka-shi Osaka 530-8565 (JP)
(72) Inventor: MATSUNO, Shinya, Osaka-shi, Osaka 530-8565 (JP); TANAKA, Kentaro, Osaka-shi, Osaka 530-8565 (JP)
(74) Representative: Hoffmann Eitle
(86) International application number: PCT/JP2023/002380
(87) International publication number: WO 2023/157597

(57) **Abstract**

Provided is a hollow resin particle which includes a shell portion and a hollow portion surrounded by the shell portion, can achieve a low dielectric constant and a low dielectric loss tangent, and can exhibit excellent heat resistance. In addition, there is provided a method for producing such a hollow resin particle. Furthermore, there is provided a use of such a hollow resin particle.

The hollow resin particle according to an embodiment of the present invention is a hollow resin particle including a shell portion and a hollow portion surrounded by the shell portion, wherein the shell portion contains a polymer (P) having an ether structure represented by Formula (1) and a phosphate structure.

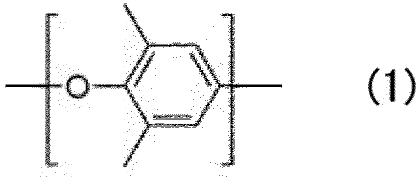

## Description

### [Technical Field]

The present invention relates to a hollow resin particle, a method for producing the same, and a use thereof.

### [Background Art]

To increase the speed of information processing using electronic devices, attempts have been made to reduce dielectric constants and to reduce dielectric loss tangents of insulating layers of multilayer printed circuit boards. As part of this effort, studies are being conducted to introduce an air space into a resin layer by mixing a hollow particle having a shell portion and a hollow portion surrounded by the shell portion into a thermosetting resin so as to achieve low dielectric constants and low dielectric loss tangents.

Hollow resin particles used in such an application have been required to have high heat resistance so that no substantial change occurs in the hollow resin particles even when being heated, for example, when a thermosetting resin into which the hollow resin particles are mixed is molded or when a solder is used.

Furthermore, when hollow resin particles are mixed into a thermosetting resin, conventional hollow resin particles may cause the thermosetting resin to penetrate into the hollow resin particles during kneading, which may result in a problem in that air spaces inside the hollow resin particles cannot be maintained.

As a conventional hollow resin particle, it has been reported that an acrylic hollow resin particle can be obtained through suspension polymerization of monomers, mainly composed of acrylic polyfunctional monomers including trimethylolpropane tri(meth)acrylate and dipentaerythritol hexaacrylate, together with a hydrophobic solvent (PTL 1). However, acrylic resins have high dielectric constants and high dielectric loss tangents, and have insufficient heat resistance. Therefore, the acrylic hollow resin particle disclosed in PTL 1 is not suitable for the purpose of achieving a low dielectric constant and a low dielectric loss tangent of a resin layer and for the purpose of imparting high heat resistance to the resin layer.

It has been reported that, as a conventional hollow resin particle, a porous hollow polymer particle can be obtained through suspension polymerization of monomers, mainly composed of acrylic polyfunctional monomers, e.g., trimethylolpropane tri(meth)acrylate, and acrylic monofunctional monomers, e.g., methyl methacrylate, together with a polar solvent containing a dispersion stabilizer (PTL 2). However, acrylic resins have high dielectric constants and high dielectric loss tangents, and have insufficient heat resistance. Therefore, similarly to the acrylic hollow resin particle disclosed in PTL 1, the porous hollow polymer particle disclosed in PTL 2 is not suitable for the purpose of achieving a low dielectric constant and a low dielectric loss tangent of a resin layer and for the purpose of imparting high heat resistance to the resin layer. Furthermore, since the porous hollow polymer particle has a thin shell surface layer portion, a thermosetting resin is likely to penetrate into the porous hollow polymer particle.

It has been reported that, as a conventional hollow resin particle, a hollow resin particle obtained by polymerizing a polyfunctional monomer and a monofunctional monomer is formulated in a resin to make an organic insulation material with excellent insulating properties, a low dielectric constant, and a low dielectric loss tangent, and specific examples of monomers used include styrene, methyl methacrylate, divinylbenzene, and trimethylolpropane tri(meth)acrylate (PTL 3). However, in the hollow resin particle disclosed in PTL 3, a styrene monomer is used in combination with an acrylic monomer having a high dielectric constant and a high dielectric loss tangent, and therefore, the dielectric constant and dielectric loss tangent of a resin layer are insufficiently low. In addition, although PTL 3 shows, as a guideline for heat resistance, the 10% weight reduction temperature by TG-DTA measurement in a nitrogen atmosphere under a temperature increase condition of 10°C/min, the heat resistance is insufficient.

A styrenic hollow resin particle, which is typically obtained through suspension polymerization of divinylbenzene with 8-18C saturated hydrocarbons (more specifically, hexadecane) and the shell of which has a single-layer structure and is composed of either a polymer or a copolymer of a crosslinkable monomer or a copolymer of a crosslinkable monomer and a monofunctional monomer has been reported as a conventional hollow resin particle, and it has been reported that a resin composition containing the hollow resin particle and a thermosetting resin is suitable for manufacturing multilayer printed circuit boards used in electronic devices and the like (PTL 4). However, an 8-18C saturated hydrocarbon (more specifically, hexadecane) is used for producing the hollow resin particle disclosed in PTL 4. Therefore, it is difficult to remove a solvating medium from a hollow portion through, for instance, distillation, and the 8-18C saturated hydrocarbon remains in a resulting styrenic hollow resin particle, making it difficult to obtain a styrenic hollow resin particle with the hollow portion thereof completely replaced by air. In addition, to obtain a styrenic hollow resin particle with a hollow portion thereof completely replaced by air, the above-described solvating medium removal is costly to produce. Furthermore, the styrenic hollow resin particle disclosed in PTL 4 has insufficient heat resistance.

A hollow resin particle composed of a polymer containing a vinyl monomer unit and a phosphate monomer unit and having a volume average particle diameter of 0.5 to 1,000 um has been reported as a conventional hollow resin particle (PTL 5). However, in the hollow resin particle disclosed in PTL 5, similarly to the hollow resin particle disclosed in PTL 3, a styrene monomer is used in combination with an acrylic monomer with a high dielectric constant and a high dielectric loss tangent, and therefore, the dielectric constant and dielectric loss tangent of a resin layer are low and insufficient, and the heat resistance is also insufficient.

A hollow polymer fine particle, which includes a shell and a hollow portion and the shell of which has a single-layer structure composed of a copolymer of at least one crosslinkable monomer and at least one monofunctional monomer, in which the copolymer is obtained by polymerizing a mixture and moreover in which the content of the crosslinkable monomer is 59.2 weight% or more based on the total content of the monofunctional monomer and the crosslinkable monomer, has been reported as a conventional hollow resin particle (PTL 6). However, the hollow resin particle disclosed in PTL 6 is a hollow resin particle with a composition based on acryl and styrene. The acrylic composition has high dielectric constants and high dielectric loss tangents, and has insufficient heat resistance. The styrenic composition has insufficient heat resistance.

It has been reported that a curable resin composition containing a vinyl compound in which the end of a bifunctional polyphenylene ether oligomer is converted into a vinyl group and a high molecular weight substance with a weight-average molecular weight of 10,000 or more, as essential components, provides a cured product with a low dielectric constant, a low dielectric loss tangent, and excellent heat resistance (PTL 7). However, the resin composition disclosed in PTL 7 is a resin composition having a vinyl group or an unsaturated double bond. Vinyl groups or unsaturated double bonds undergo oxidation reactions when heated in a manufacturing process, and the heat generated through thermal decomposition causes warpage in the resin composition, and the dielectric loss tangent deteriorates due to the thermal history of the resin composition.

It has been reported that a thermosetting resin composition including (A) a modified polyphenylene ether compound, which has a weight-average molecular weight of 1,000 or more and an intrinsic viscosity of 0.03 to 0.12 dl/g measured in chloroform at 25°C and is terminally modified with substituents having carbon-carbon unsaturated double bonds at the molecular ends, (B) a crosslinkable styrene-butadiene copolymer having a number average molecular weight of less than 10,000 and a styrene content of 50 mass% or less and a butadiene content of 50 mass% or more in the molecule, (C) a styrenic thermoplastic elastomer having a weight average molecular weight of 10,000 or more, (D) a curing accelerator, (E) an inorganic filler, and (F) a flame retardant and in which the formulation ratio of the component (A):[the component(B)+the component (C)] is 90:10 to 10:90, has toughness and excellent dielectric characteristics, suppresses in-plane dielectric constant variation in a resulting substrate, and can suppress occurrence of warpage (PTL 8). However, in the resin composition disclosed in PTL 8, the resin curing temperature is 100°C or higher and a temperature at or above the boiling point of a solvating medium or a solvent is required, and therefore, it is difficult to produce hollow particles using this resin composition through a suspension polymerization method.

### [Citation List]

### [Patent Literature]

[PTL 1] Japanese Patent No. 6513273
[PTL 2] Japanese Patent No. 4445495
[PTL 3] Japanese Patent Application Publication No. 2000-313818
[PTL 4] Japanese Patent No. 4171489
[PTL 5] WO 2020/054816
[PTL 6] Japanese Patent No. 4448930
[PTL 7] Japanese Patent Application Publication No. 2006-83364
[PTL 8] Japanese Patent Application Publication No. 2018-95815

### [Summary of Invention]

### [Technical Problem]

The present invention has been made to solve the above-described conventional problems, and a main object of the present invention is to provide a hollow resin particle which includes a shell portion and a hollow portion surrounded by the shell portion, can achieve a low dielectric constant and a low dielectric loss tangent, and can exhibit excellent heat resistance. A further object of the present invention is to provide a method for producing such a hollow resin particle. A still further object of the present invention is to provide a use of such a hollow resin particle.

### [Solution to Problem]

[1] A hollow resin particle according to an embodiment of the present invention is a hollow resin particle including a shell portion and a hollow portion surrounded by the shell portion, in which the shell portion contains a polymer (P) having an ether structure represented by Formula (1) and a phosphate structure. 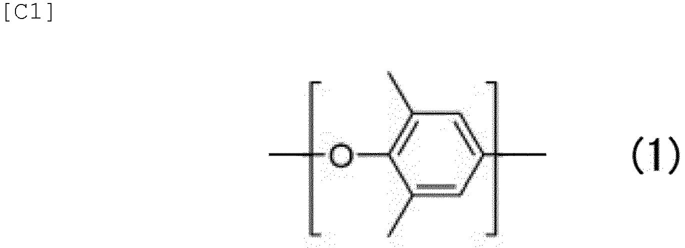
[2] In the hollow resin particle according to [1] above, the above-described polymer (P) may be a polymer (AM) obtained through a reaction of a compound (A) having the ether structure represented by Formula (1) above and a radical-reactive group with a monomer (M) that reacts with the compound (A), and the monomer (M) may contain a compound (B) having the phosphate structure and the radical-reactive group.
[3] In the hollow resin particle according to [2] above, when a total amount of the compound (A) and the monomer (M) is set to 100 parts by weight, a ratio of the above-described compound (A) to the above-described monomer (M) (compound (A):monomer (M)) may be (20 parts by weight to 80 parts by weight):(80 parts by weight to 20 parts by weight) in parts by weight.
[4] In the hollow resin particle according to [2] or [3] above, when a total amount of the above-described compound (A) and the above-described monomer (M) is 100 parts by weight, the amount of the above-described compound (B) based on the total amount may be 0.0001 parts by weight to 0.0190 parts by weight.
[5] In the hollow resin particle according to [1] above, the above-described polymer (P) may include elemental sulfur.
[6] In the hollow resin particle according to [5] above, a vinyl group residual rate of the hollow resin particle may be 150 or less.
[7] In the hollow resin particle according to [5] or [6] above, an exothermic onset temperature of the hollow resin particle in the atmosphere may be 290°C or higher.
[8] In the hollow resin particle according to any one of [5] to [7] above, a sulfur atom content of the hollow resin particle may be 0.1 mass% to 3.0 mass%.
[9] In the hollow resin particle according to any of [5] to [8] above, the above-described polymer (P) may be a polymer obtained through a reaction of a thiol with a polymer (AM) obtained through a reaction of the compound (A) having the ether structure represented by Formula (1) above and a radical-reactive group with the monomer (M) that reacts with the compound (A).
[10] In the hollow resin particle according to [9] above, when a total amount of the compound (A) and the monomer (M) is set to 100 parts by weight, a ratio of the above-described compound (A) to the above-described monomer (M) (compound (A):monomer (M)) may be (20 parts by weight to 80 parts by weight):(80 parts by weight to 20 parts by weight) in parts by weight.
[11] In the hollow resin particle according to any of [1] to [10] above, a volume average particle diameter of the hollow resin particle may be 0.1 um to 100 µm.
[12] In the hollow resin particle according to any of [1] to [11] above, a coefficient of variation (CV value) of a particle diameter of the hollow resin particle may be 10% to 50%.
[13] In the hollow resin particle according to any of [1] to [12] above, a 5% weight reduction temperature of the hollow resin particle when the temperature is raised at 10°C/min in a nitrogen atmosphere may be 290°C or higher.
[14] In the hollow resin particle according to any of [1] to [13] above, the hollow resin particle may be used in a resin composition for a semiconductor member.
[15] In the hollow resin particle according to any of [1] to [13] above, the hollow resin particle may be used in a paint composition.
[16] In the hollow resin particle according to any of [1] to [13] above, the hollow resin particle may be used in a thermal insulation resin composition.
[17] In the hollow resin particle according to any of [1] to [13] above, the hollow resin particle may be used in a light diffusion resin composition.
[18] In the hollow resin particle according to any of [1] to [13] above, the hollow resin particle may be used in a light diffusion film.
[19] A resin composition for a semiconductor member according to an embodiment of the present invention includes: the hollow resin particle according to any of [1] to [13] above.
[20] A paint composition according to an embodiment of the present invention includes: the hollow resin particle according to any of [1] to [13] above.
[21] A thermal insulation resin composition according to an embodiment of the present invention includes: the hollow resin particle according to any of [1] to [13] above.
[22] A light diffusion resin composition according to an embodiment of the present invention includes: the hollow resin particle according to any of [1] to [13] above.
[23] A light diffusion film according to an embodiment of the present invention includes: the hollow resin particle according to any of [1] to [13] above.
[24] A method for producing a hollow resin particle according an embodiment of the present invention includes: reacting 20 parts by weight to 80 parts by weight of a compound (A) having an ether structure represented by Formula (1) and a radical-reactive group with 80 parts by weight to 20 parts by weight of a monomer (M) that reacts with the compound (A) (a total amount of the compound (A) and the monomer (M) being set to 100 parts by weight) in an aqueous medium in the presence of a non-reactive solvent, in which the monomer (M) contains a compound (B) having a phosphate structure and the radical-reactive group. 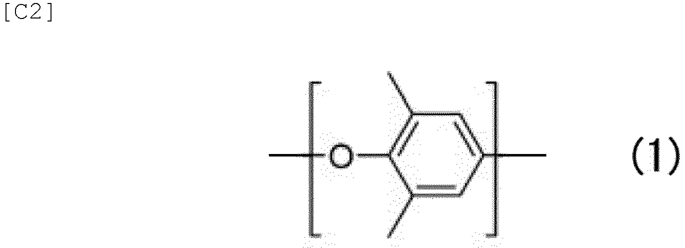
[25] A method for producing a hollow resin particle according to an embodiment of the present invention includes: (I) an oil phase preparation step of mixing 20 parts by weight to 80 parts by weight of a compound (A) having an ether structure represented by Formula (1) and a radical-reactive group and 80 parts by weight to 20 parts by weight of a monomer (M) that reacts with the compound (A) (a total amount of the compound (A) and the monomer (M) being set to 100 parts by weight) with a non-reactive solvent to prepare an oil phase; (II) a suspension preparation step of adding the oil phase to an aqueous phase containing an aqueous medium and stirring the mixture to prepare a suspension; and (III) a thiol-ene reaction step of adding a thiol to the suspension to cause a reaction and prepare a reactant.

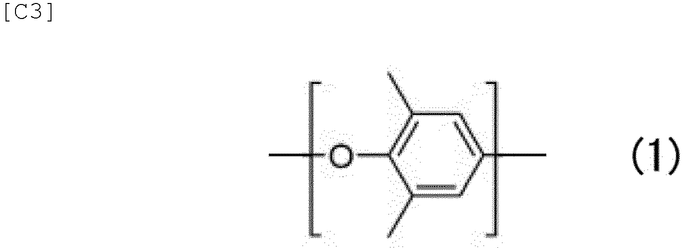

### [Advantageous Effects of Invention]

According to an embodiment of the present invention, it is possible to provide a hollow resin particle which includes a shell portion and a hollow portion surrounded by the shell portion, can achieve a low dielectric constant and a low dielectric loss tangent, and can exhibit excellent heat resistance. In addition, it is possible to provide a method for producing such a hollow resin particle. Furthermore, it is possible to provide a use of such a hollow resin particle.

### [Brief Description of Drawings]

[Fig. 1]

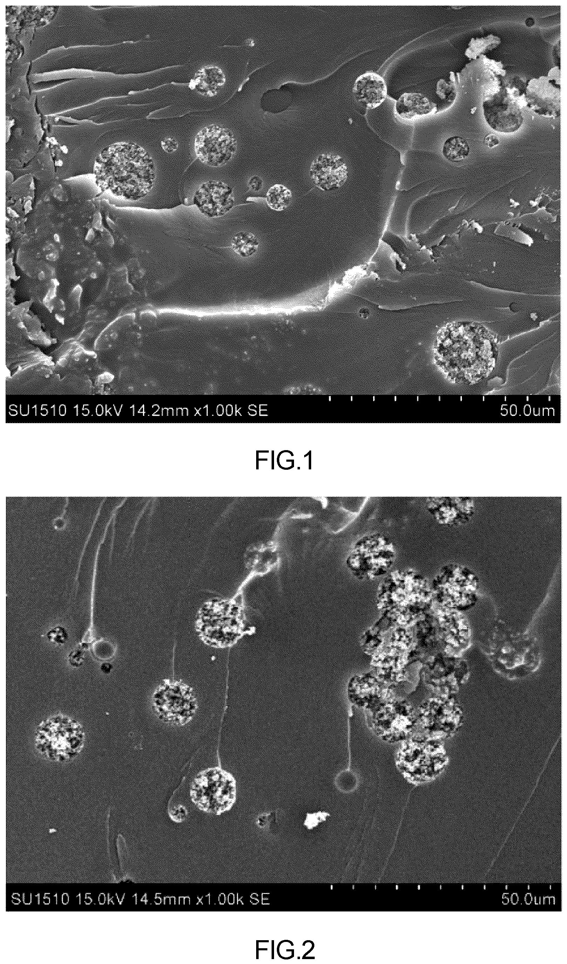

   Fig. 1 is a cross-sectional photographic view of particles (1) obtained in Example 1.
[Fig. 2]
   Fig. 2 is a cross-sectional photographic view of particles (2) obtained in Example 2.
[Fig. 3]

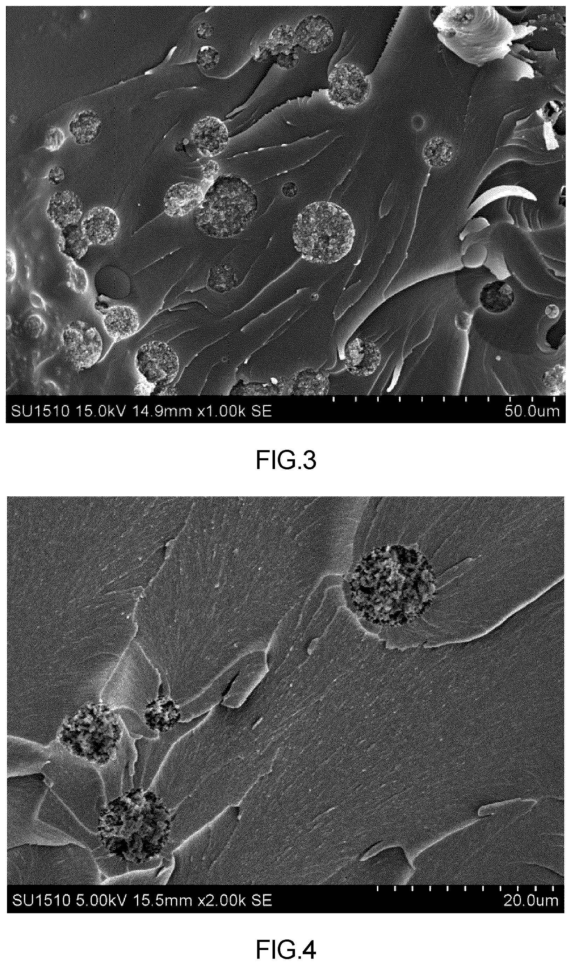

   Fig. 3 is a cross-sectional photographic view of particles (3) obtained in Example 3.
[Fig. 4]
   Fig. 4 is a cross-sectional photographic view of particles (4) obtained in Example 4.
[Fig. 5]

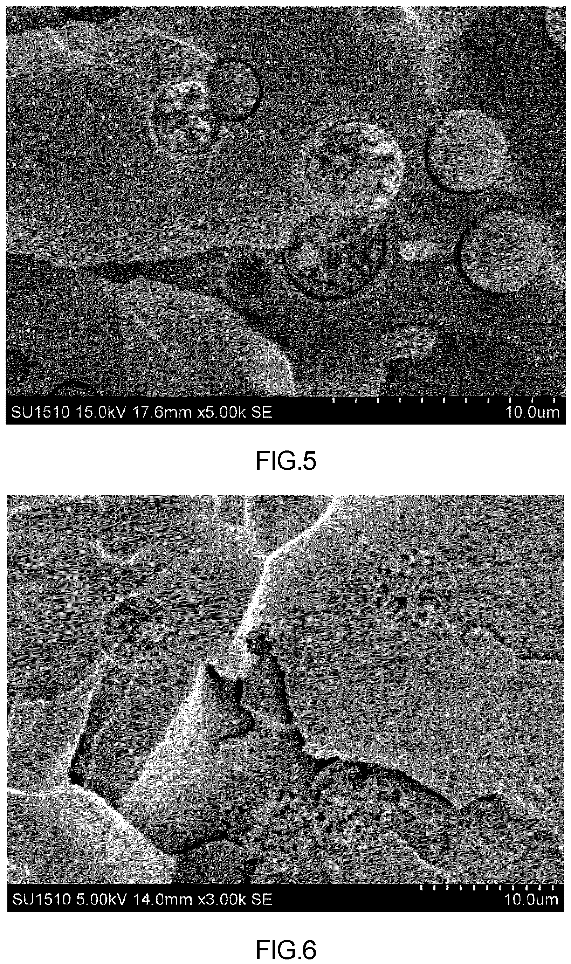

   Fig. 5 is a cross-sectional photographic view of particles (5) obtained in Example 5.
[Fig. 6]
   Fig. 6 is a cross-sectional photographic view of particles (6) obtained in Example 6.
[Fig. 7]

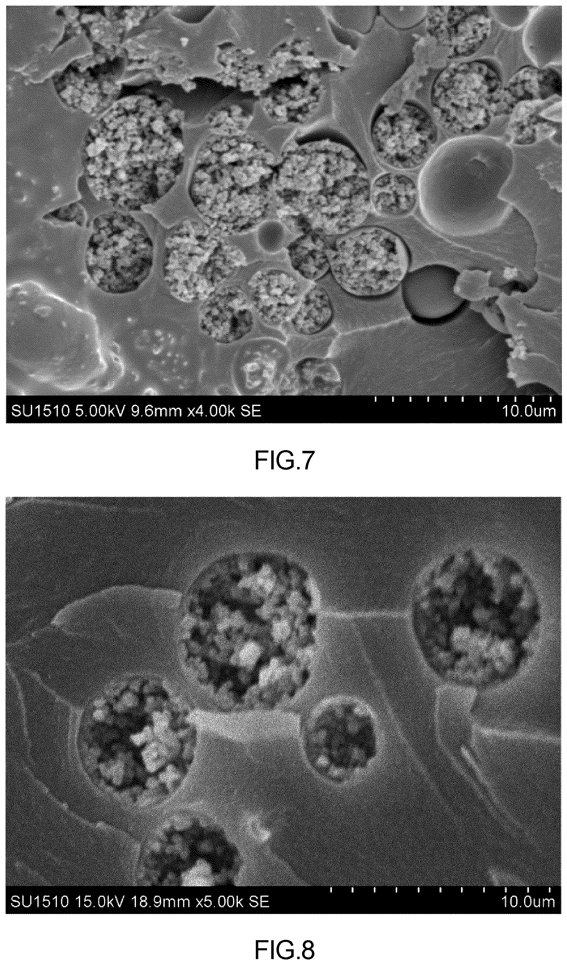

   Fig. 7 is a cross-sectional photographic view of particles (7) obtained in Example 7.
[Fig. 8]
   Fig. 8 is a cross-sectional photographic view of particles (C1) obtained in Comparative Example 1.
[Fig. 9]

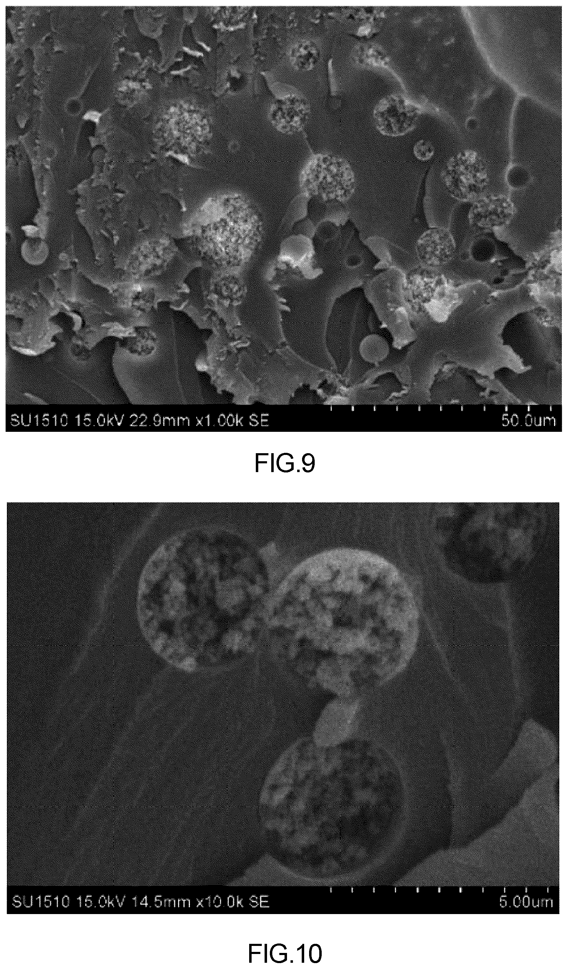

   Fig. 9 is a cross-sectional photographic view of particles (C3) obtained in Comparative Example 3.
[Fig. 10]
   Fig. 10 is a cross-sectional photographic view of particles (8) obtained in Example 8.
[Fig. 11]

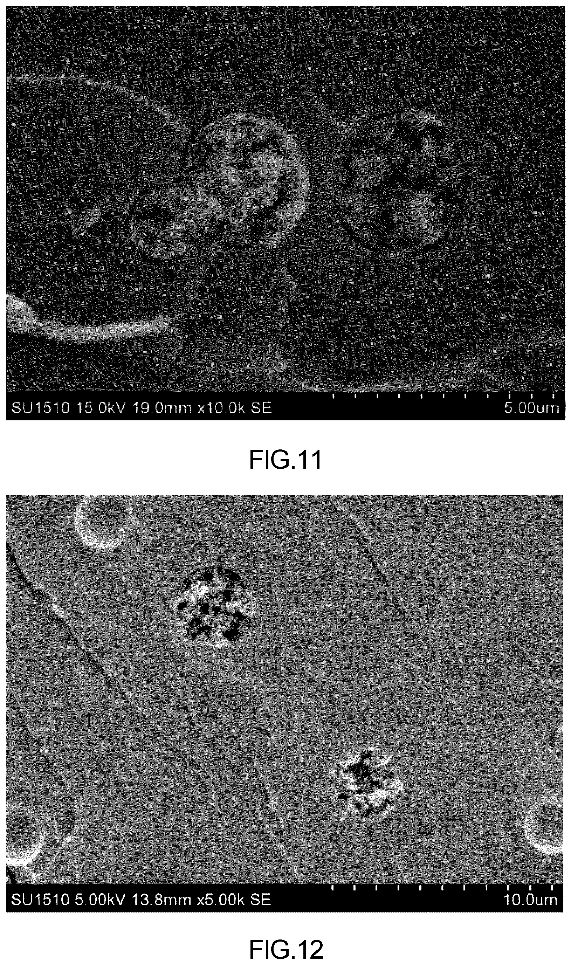

   Fig. 11 is a cross-sectional photographic view of particles (9) obtained in Example 9.
[Fig. 12]
   Fig. 12 is a cross-sectional photographic view of particles (10) obtained in Example 10.
[Fig. 13]

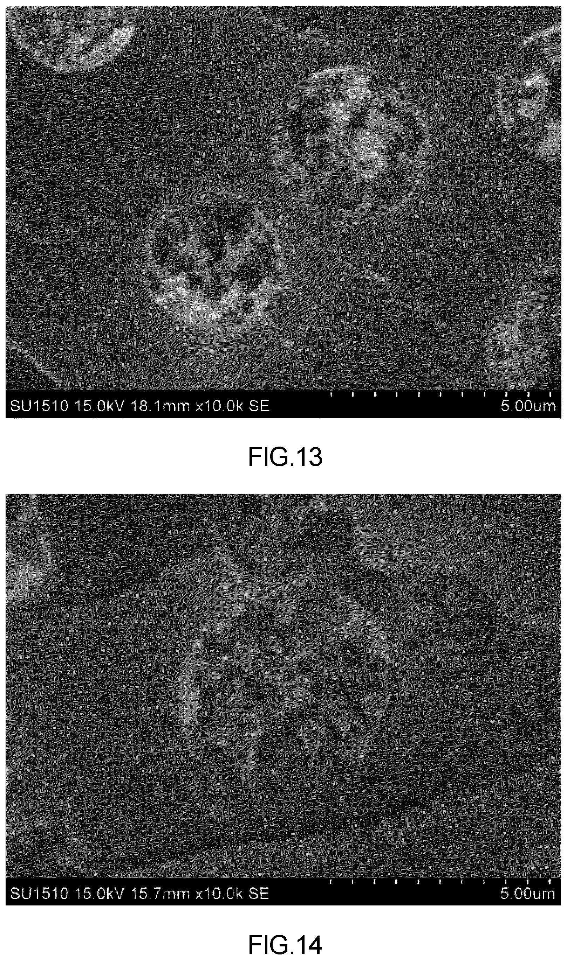

   Fig. 13 is a cross-sectional photographic view of particles (11) obtained in Example 11.
[Fig. 14]
   Fig. 14 is a cross-sectional photographic view of particles (12) obtained in Example 12.
[Fig. 15]

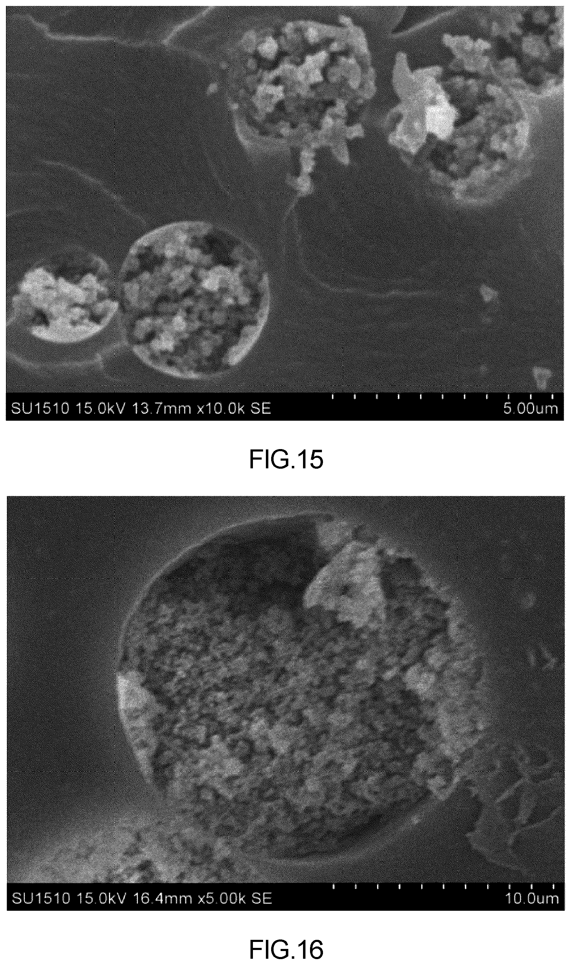

   Fig. 15 is a cross-sectional photographic view of particles (13) obtained in Example 13.
[Fig. 16]
   Fig. 16 is a cross-sectional photographic view of particles (14) obtained in Example 14.
[Fig. 17]

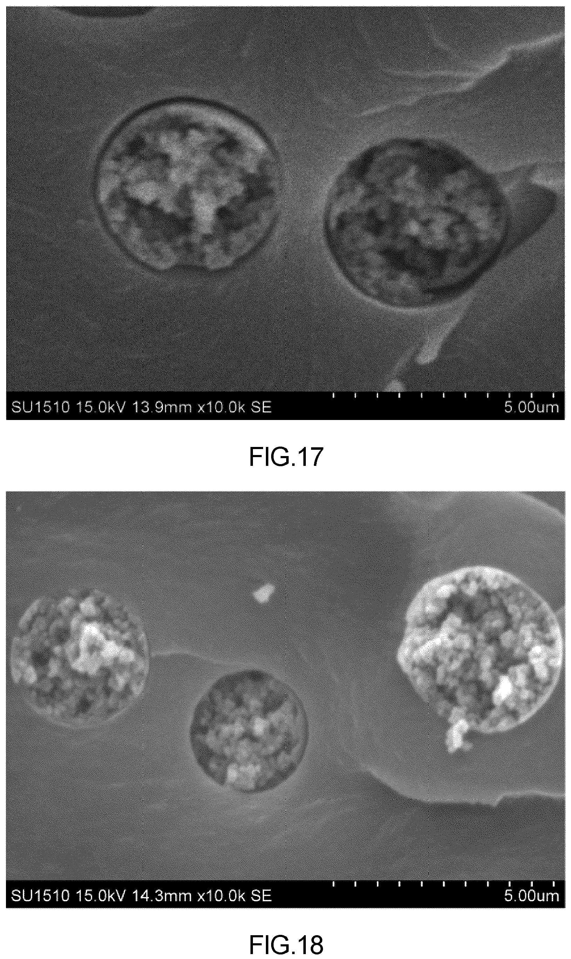

   Fig. 17 is a cross-sectional photographic view of particles (15) obtained in Example 15.
[Fig. 18]
   Fig. 18 is a cross-sectional photographic view of particles (16) obtained in Example 16.
[Fig. 19]

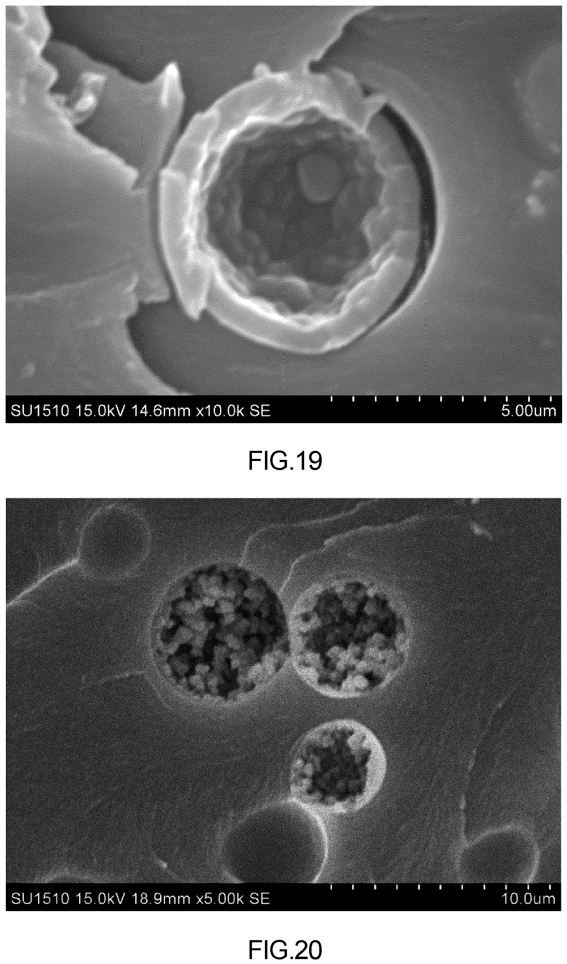

   Fig. 19 is a cross-sectional photographic view of particles (17) obtained in Example 17.
[Fig. 20]
   Fig. 20 is a cross-sectional photographic view of particles (C4) obtained in Comparative Example 4.
[Fig. 21]

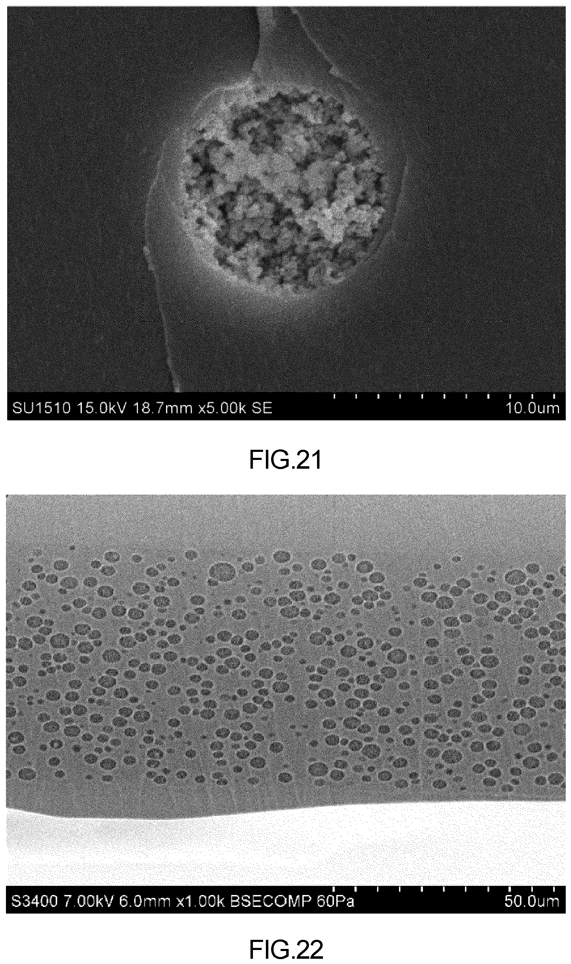

   Fig. 21 is a cross-sectional photographic view of a particle (C5) obtained in Comparative Example 5.
[Fig. 22]
   Fig. 22 is a cross-sectional photographic view of a film produced using the particles (5) obtained in Example 5.
[Fig. 23]

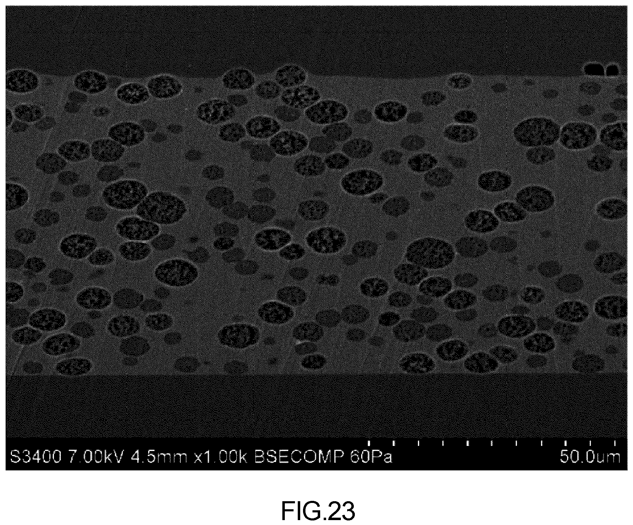

   Fig. 23 is a cross-sectional photographic view of a film produced using the particles (C3) obtained in Comparative Example 3.
[Fig. 24]

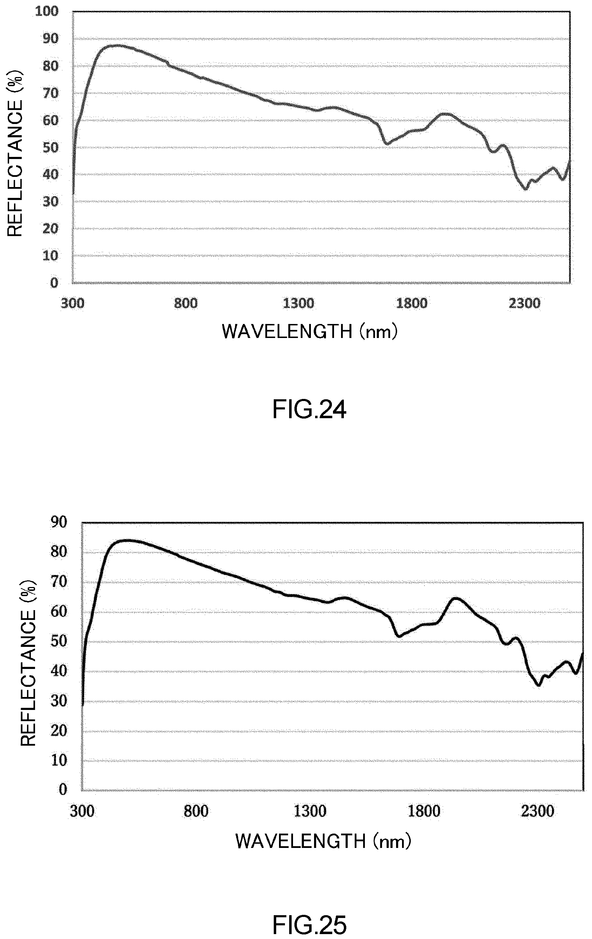

   Fig. 24 is an ultraviolet-visible near-infrared spectrophotometer measurement result view of a paint composition (6-1) obtained in Example 21.
[Fig. 25]
   Fig. 25 is an ultraviolet-visible near-infrared spectrophotometer measurement result view of a paint composition (9-1) obtained in Example 24.

### [Description of Embodiments]

Hereinafter, embodiments of the present invention will be described, but the present invention is not limited to these embodiments.

When the term "(meth)acryl" is used in the present specification, it means "acryl and/or methacryl." When the term "(meth)acrylate" is used in the present specification, it means "acrylate and/or methacrylate." When the term "(meth)allyl" is used in the present specification, it means "allyl and/or methallyl." When the term "(meth)acrolein" is used in the present specification, it means "acrolein and/or methacrolein." In addition, when the term "acid (salt)" is used in the present specification, it means "acid and/or a salt thereof." Examples of salts include alkali metal salts and alkaline earth metal salts, and specific examples thereof include sodium salts and potassium salts.

### ««1. Hollow resin particles»»

### «1-1. Structure and characteristics of hollow resin particle»

A hollow resin particle according to an embodiment of the present invention is a hollow resin particle having a shell portion and a hollow portion enclosed by the shell portion. The term hollow referred to herein means a state in which the interior is filled with a substance other than a resin, for example, a gas or a liquid. From the viewpoint of being able to better express the effects of the present invention, it preferably means a state in which the interior is filled with a gas.

The shell portion and the hollow portion surrounded by the shell portion may include one hollow region or a plurality of hollow regions (porous structure).

The volume average particle diameter of hollow resin particles according to the embodiment of the present invention is preferably 0.1 um to 100 µm, more preferably 0.2 um to 50.0 um, still more preferably 0.3 um to 30.0 um, and particularly preferably 0.4 um to 20.0 um. If the volume average particle diameter of the hollow resin particles according to the embodiment of the present invention is within the above-described ranges, the effects of the present invention can be better expressed. If the volume average particle diameter of the hollow resin particles according to the embodiment of the present invention is too small outside the above-described ranges, the thickness of the shell portion will be relatively thin, and therefore, there is a concern that the hollow resin particles will not have sufficient strength. In addition, if the hollow resin particles are kneaded into a thermosetting resin, there is a concern that the thermosetting resin will penetrate into the hollow resin particles. There is a concern that, if the volume average particle diameter of the hollow resin particles according to the embodiment of the present invention is too large outside the above-described ranges, phase separation between a solvent and polymer produced through polymerization of monomer components during suspension polymerization will be unlikely to occur, which may make formation of the shell portion difficult.

The coefficient of variation (CV value) of the particle diameter of the hollow resin particles according to the embodiment of the present invention is preferably 10% to 50%, more preferably 15% to 45%, still more preferably 18% to 42%, and particularly preferably 20% to 40%. If the coefficient of variation (CV value) of the particle diameter of the hollow resin particles according to the embodiment of the present invention is within the above-described ranges, the effects of the present invention can be better expressed. There is a concern that, if the coefficient of variation (CV value) of the particle diameter of the hollow resin particles according to the embodiment of the present invention is too small outside the above-described ranges, when the hollow resin particles are kneaded into a thermosetting resin, they will be difficult to disperse within the thermosetting resin, causing variations in thickness in a case where a resin layer is made from a resin composition, for example. There is a concern that, if the coefficient of variation (CV value) of the particle diameter of the hollow resin particles according to the embodiment of the present invention is too large outside the above-described ranges, an increase in amount of coarse particles will make formation of a thin film difficult or cause variations in thickness in a case where a resin layer is made from a resin composition, for example.

The 5% weight reduction temperature of the hollow resin particles according to the embodiment of the present invention when the temperature is raised at 10°C/min in a nitrogen atmosphere is preferably 290°C or higher, more preferably 300°C or higher, still more preferably 320°C or higher, particularly preferably 340°C or higher, and most preferably 360°C or higher. Practically, the upper limit of the above-described 5% weight reduction temperature is preferably 500°C or lower. If the 5% weight reduction temperature of the hollow resin particles according to the embodiment of the present invention when the temperature is raised at 10°C/min in a nitrogen atmosphere is within the above-described ranges, the hollow resin particles according to the embodiment of the present invention can exhibit excellent heat resistance. There is a concern that, if the 5% weight reduction temperature of the hollow resin particles according to the embodiment of the present invention when the temperature is raised at 10°C/min in a nitrogen atmosphere is too small outside the above-described ranges, the particles will be deformed through heating, for example, the hollow resin particles will be deformed through heating for a curing reaction when the hollow resin particles are kneaded into a thermosetting resin, resulting in loss of the hollow portion, which may reduce the effect of reducing a dielectric constant and a dielectric loss tangent.

The elemental phosphorus content in the hollow resin particles according to the embodiment of the present invention is preferably 1,000 µg/g or lower, more preferably 750 µg/g or lower, still more preferably 600 µg/g or lower, and particularly preferably 500 µg/g or lower. If the elemental phosphorus content in the hollow resin particles according to the embodiment of the present invention is within the above-described ranges, the effects of the present invention can be better expressed. There is a concern that, if the elemental phosphorus content in the hollow resin particles according to the embodiment of the present invention is too high outside the above-described ranges, it will not be possible to achieve a low dielectric constant and a low dielectric loss tangent of a resin layer formed from a resin composition containing the hollow resin particles.

The elemental magnesium content in the hollow resin particles according to the embodiment of the present invention is preferably 200 µg/g or lower, more preferably 150 µg/g or lower, still more preferably 125 µg/g or lower, and particularly preferably 100 µg/g or lower. If the elemental magnesium content in the hollow resin particles according to the embodiment of the present invention is within the above-described ranges, the effects of the present invention can be better expressed. There is a concern that, if the elemental magnesium content in the hollow resin particles according to the embodiment of the present invention is too high outside the above-described ranges, it will not be possible to achieve a low dielectric constant and a low dielectric loss tangent of a resin layer formed from a resin composition containing the hollow resin particles.

### «1-2. Shell portion»

A shell portion contains a polymer (P) having an ether structure represented by Formula (1) and a phosphate structure. The effects of the present invention can be better expressed when the shell portion contains the polymer (P) having such structures.

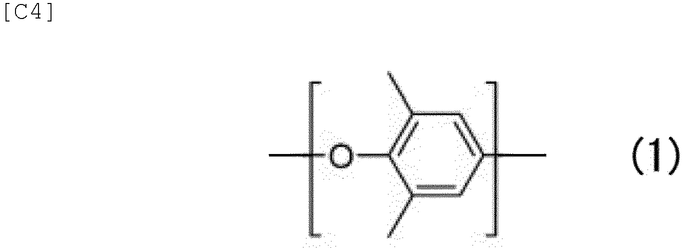

The ether structure represented by Formula (1) in the polymer (P) may be of only one type or two or more types.

The phosphate structure in the polymer (P) may be of only one type or two or more types.

The phosphate structure is preferably represented by Formula (2) in that the effects of the present invention can be better expressed.

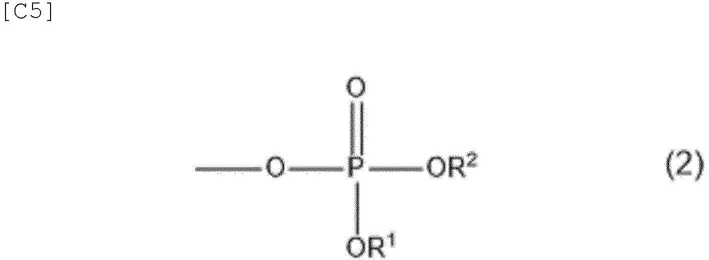

In Formula (2), R¹ and R² each independently represent an organic group or a hydrogen atom. Organic groups that can be taken by R¹ and R² in Formula (2) are groups containing carbon atoms and may also contain inorganic atoms.

The organic groups that can be taken by R¹ and R² in Formula (2) are more preferably represented by Formula (3) in that the effects of the present invention can be better expressed.

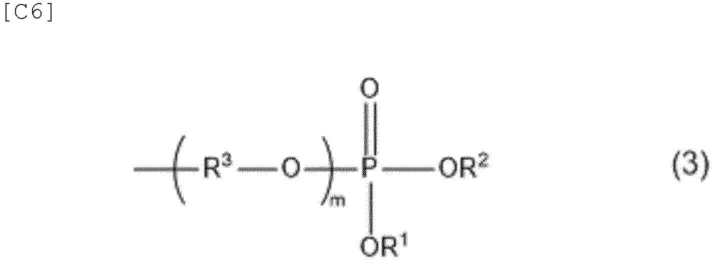

In Formula (3), R¹ and R² each independently represent an organic group or a hydrogen atom. Organic groups that can be taken by R¹ and R² in Formula (3) are groups containing carbon atoms and may also contain inorganic atoms. In Formula (3), R³ is a 1-30C linear or branched alkylene group, and m represents 1 to 300.

In Formula (3), R³ is preferably a 1-20C alkylene group having a linear or branched chain, more preferably a 1-10C alkylene group having a linear or branched chain, still more preferably a 1-8C alkylene group having a linear or branched chain, particularly preferably a 1-6C alkylene group having a linear or branched chain, and most preferably a 1-4C alkylene group having a linear or branched chain.

In Formula (3), m is preferably 1 to 100, more preferably 1 to 50, still more preferably 1 to 40, and particularly preferably 1 to 30.

The phosphate structure may be a phosphate monoester structure (R¹ and R² are all hydrogen atoms), a phosphate diester structure (one of R¹ and R² is an organic group and the other is a hydrogen atom), or a phosphate triester structure (R¹ and R² are all organic groups). From the viewpoint that the effects of the present invention can be better expressed, the phosphate structure is preferably a phosphate monoester structure or a phosphate diester structure.

The polymer (P) may be of only one type or two or more types.

From the viewpoint that the effects of the present invention can be better expressed, the proportion of the polymer (P) content in the shell portion is preferably from 60 weight% to 100 weight%, more preferably 70 weight% to 100 weight%, still more preferably 80 weight% to 100 weight%, and particularly preferably 90 weight% to 100 weight%.

The polymer (P) may include elemental sulfur. In other words, the polymer (P) may have an ether structure represented by Formula (1), a phosphate structure, and elemental sulfur.

The elemental sulfur that the polymer (P) can have is preferably elemental sulfur in an alkylthio group (a group represented by R-S-(R is an alkyl group)).

The alkyl group of the above-described alkylthio group is preferably a 1-20C alkyl group having a linear or branched chain, more preferably a 4-16C alkyl group having a linear or branched chain, still more preferably a 6-12C alkyl group having a linear or branched chain, and particularly preferably an 8-10C alkyl group having a linear or branched chain.

The vinyl group residual rate of the hollow resin particles according to the embodiment of the present invention when the polymer (P) includes elemental sulfur is preferably 15% or less, more preferably 12% or less, still more preferably 10% or less, and particularly preferably 8% or less. If the vinyl group residual rate of the hollow resin particles according to the embodiment of the present invention is within the above-described ranges, that is, if the amount of residual vinyl group is significantly small, heat generated through thermal decomposition (for example, thermal decomposition at a production process temperature of semiconductor members of about 200°C to 300°C) can be suppressed and superior heat resistance can be expressed. In addition to such contribution to the improvement in heat resistance, if the vinyl group residual rate of the hollow resin particles according to the embodiment of the present invention is within the above-described ranges, that is, if the amount of residual vinyl group is significantly small, a lower dielectric constant and a lower dielectric loss tangent can also be achieved. There is a concern that, if the vinyl group residual rate of the hollow resin particles according to the embodiment of the present invention is too large outside the above-described ranges, an oxidation reaction will occur in the particles through heating in a production process, resulting in decomposition and heat generation, and for example, warpage will occur in a thermosetting resin composition obtained through kneading into a thermosetting resin and a low dielectric constant and a low dielectric loss tangent cannot be achieved.

In the hollow resin particles according to the embodiment of the present invention, the sulfur atom content obtained through fluorescence X-ray analysis when the polymer (P) includes elemental sulfur is preferably 0.1 mass% to 3.0 mass%, more preferably 0.5 mass% to 2.5 mass%, still more preferably 0.8 mass% to 2.0 mass%, and particularly preferably 1.0 mass% to 1.5 mass%. If the sulfur atom content in the hollow resin particles according to the embodiment of the present invention is within the above-described ranges, heat generation through thermal decomposition (for example, thermal decomposition at a production process temperature of semiconductor members of about 200°C to 300°C) is suppressed. In addition to such contribution to the suppression of heat generation, if the sulfur atom content in the hollow resin particles according to the embodiment of the present invention is within the above-described ranges, a thiol-ene reaction to the particles will proceed sufficiently and the amount of vinyl group in the particles will be reduced, thereby also achieving a lower dielectric constant and a lower dielectric loss tangent. There is a concern that, if the sulfur atom content in the hollow resin particles according to the embodiment of the present invention is too large outside the above-described ranges, the odor will become stronger and cause problems in practical use. There is a concern that, if the sulfur atom content in the hollow resin particles according to the embodiment of the present invention is too small outside the above-described ranges, a thiol-ene reaction to the particles will not proceed sufficiently and a large amount of vinyl group will remain in the particles, resulting in decomposition and heat generation of the particles through heating in the production process, and for example, warpage will occur in a thermosetting resin composition obtained through kneading into a thermosetting resin and a low dielectric constant and a low dielectric loss tangent cannot be achieved.

The exothermic onset temperature of the hollow resin particles according to the embodiment of the present invention in the atmosphere when the polymer (P) includes elemental sulfur is preferably 290°C or higher, more preferably 300°C or higher, still more preferably 310°C or higher, and particularly preferably 315°C or higher. If the exothermic onset temperature of the hollow resin particles according to the embodiment of the present invention in the atmosphere is within the above-described ranges, the hollow resin particles according to the embodiment of the present invention can express superior heat resistance. There is a concern that, if the exothermic onset temperature of the hollow resin particles according to the embodiment of the present invention in the atmosphere is too small outside the above-described ranges, for example, the particles will undergo an oxidation reaction through heating, which may cause the particles to decompose and generate heat, and for example, warpage will occur in a thermosetting resin composition obtained through kneading into a thermosetting resin.

The shell portion may contain any other appropriate components within the scope not impairing the effect of the present invention.

As the polymer (P), any appropriate polymer can be employed within the scope not impairing the effect of the present invention as long as the polymer has an ether structure represented by Formula (1) and a phosphate structure. From the viewpoint of being able to better express the effects of the present invention, preferred examples of such a polymer (P) include the following two embodiments. (1) Embodiment 1 of polymer (P): This is a polymer having an ether structure represented by Formula (1) and a phosphate structure and preferably a polymer (AM) obtained through a reaction of a compound (A) having the ether structure represented by Formula (1) and a radical-reactive group with a monomer (M) that reacts with the compound (A), and the monomer (M) contains a compound (B) having the phosphate structure and the radical-reactive group. (2) Embodiment 2 of polymer (P): This is a polymer having an ether structure represented by Formula (1), a phosphate structure, and elemental sulfur and preferably a polymer obtained through a reaction of a thiol with the polymer (AM) obtained through a reaction of a compound (A) having the ether structure represented by Formula (1) and a radical-reactive group with a monomer (M) that reacts with the compound (A), and the monomer (M) contains a compound (B) having the phosphate structure and the radical-reactive group.

### <Embodiment 1 of polymer (P)>

One preferred Embodiment 1 of the polymer (P) is a polymer having an ether structure represented by Formula (1) and a phosphate structure and preferably a polymer (AM) obtained through a reaction of a compound (A) having the ether structure represented by Formula (1) and a radical-reactive group with a monomer (M) that reacts with the compound (A), and the monomer (M) contains a compound (B) having the phosphate structure and the radical-reactive group. In other words, one preferred Embodiment 1 of the polymer (P) is the polymer (AM).

The compound (A) having an ether structure represented by Formula (1) and a radical-reactive group may be of only one type or two or more types.

The compound (B) having a phosphate structure and a radical-reactive group may be of only one type or two or more types.

As radical-reactive groups, any appropriate polymers can be employed within the scope not impairing the effect of the present invention as long as they are groups generally known as radical-reactive groups. From the viewpoint of being able to better express the effects of the present invention, preferred examples of such radical-reactive groups include groups having carbon-carbon unsaturated double bonds, and specific examples thereof include a vinyl group, an acrylic group, a methacrylic group, an acrylamide group, and an allyl group.

The radical-reactive group preferably has a structure represented by Formula (4) from the viewpoint of being able to better express the effects of the present invention.

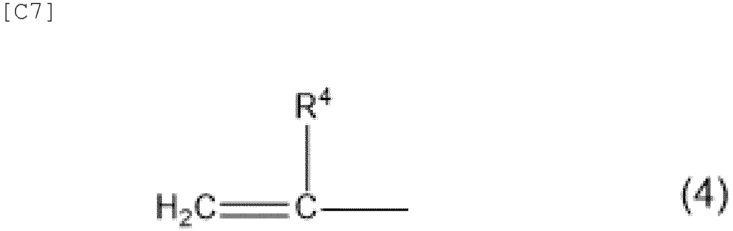

In Formula (4), R⁴ represents a methyl group or a hydrogen atom.

The ratio of the compound (A) to the monomer (M) when the total amount of the compound (A) and the monomer (M) is set to 100 parts by weight (compound (A):monomer (M)) is preferably (20 parts by weight to 80 parts by weight):(80 parts by weight to 20 parts by weight), more preferably (20 parts by weight to 70 parts by weight):(80 parts by weight to 30 parts by weight), still more preferably (25 parts by weight to 60 parts by weight):(75 parts by weight to 40 parts by weight), and particularly preferably (30 parts by weight to 50 parts by weight):(70 parts by weight to 50 parts by weight) in parts by weight. There is a concern that, if the proportion of the compound (A) content is too small outside the above-described ranges, the heat resistance will become insufficient. There is a concern that, if the proportion of the compound (A) content is too large outside the above-described ranges, it will be difficult to form a shell portion and a hollow portion surrounded by the shell portion.

When the total amount of the compound (A) and the monomer (M) is set to 100 parts by weight, the amount of compound (B) to the total amount thereof is preferably 0.0001 parts by weight to 0.0190 parts by weight, more preferably 0.0005 parts by weight to 0.0190 parts by weight, still more preferably 0.0010 parts by weight to 0.0170 parts by weight, and particularly preferably 0.0015 parts by weight to 0.0150 parts by weight. There is a concern that, if the amount of compound (B) is too small outside the above-described ranges, reduction in average particle diameter or dispersion stability will become insufficient, resulting in frequent formation of polymerization agglomerates or coarse particles. There is a concern that, if the proportion of the compound (B) content is too large outside the above-described ranges, it will be difficult to form a shell portion and a hollow portion surrounded by the shell portion.

As the compound (A), any appropriate compound can be employed within the scope not impairing the effects of the present invention as long as it has an ether structure represented by Formula (1) and a radical-reactive group. From the viewpoint of being able to better express the effects of the present invention, preferred examples of such a compound (A) include a polyphenylene ether. Examples of commercially available products of polyphenylene ethers include trade name "NORYL (registered trademark)" series (such as NORYL (registered trademark) SA9000) (manufactured by SABIC), trade name "Iupiace (registered trademark)" series (manufactured by Mitsubishi Chemical Corporation), trade name "Zylon (registered trademark)" series (manufactured by Asahi Kasei Corporation), and trade name "OPE-2St" series (manufactured by Mitsubishi Gas Chemical Company, Inc.).

From the viewpoint that hollow resin particles with excellent heat resistance can be made more easily, the polyphenylene ether is preferably an oligomer and the number average molecular weight Mn is preferably 500 to 3,500.

As the compound (B), any appropriate compound can be employed within the scope not impairing the effects of the present invention as long as it has a phosphate structure and a radical-reactive group. From the viewpoint of being able to better express the effects of the present invention, such a compound (B) is preferably a compound represented by Formula (5) .

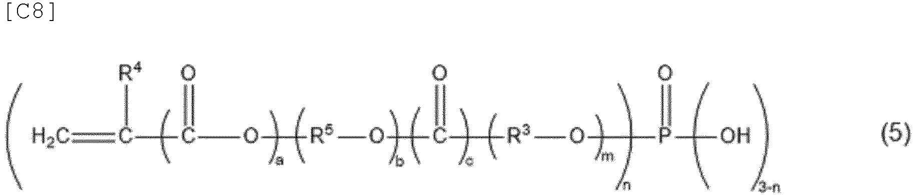

In Formula (5), R³ and R⁵ are 1-30C linear or branched alkylene groups, and R⁴ is a methyl group or a hydrogen atom. In Formula (5), m represents 1 to 300. In Formula (5), n represents 1 to 3. In Formula (5), a is 0 or 1, b is 0 to 300, and c is 0 or 1.

In Formula (5), R³ is preferably a 1-20C alkylene group having a linear or branched chain, more preferably a 1-10C alkylene group having a linear or branched chain, still more preferably a 1-8C alkylene group having a linear or branched chain, particularly preferably a 1-6C alkylene group having a linear or branched chain, and most preferably a 1-4C alkylene group having a linear or branched chain.

In Formula (5), R⁵ is preferably a 1-20C alkylene group having a linear or branched chain, more preferably a 1-10C alkylene group having a linear or branched chain, still more preferably a 1-8C alkylene group having a linear or branched chain, particularly preferably a 1-6C alkylene group having a linear or branched chain, and most preferably a 1-4C alkylene group having a linear or branched chain.

In Formula (5), m is preferably 1 to 100, more preferably 1 to 50, still more preferably 1 to 40, and particularly preferably 1 to 30.

In Formula (5), b is preferably 0 to 100, more preferably 0 to 50, still more preferably 0 to 10, particularly preferably 0 to 5, and most preferably 0 or 1.

As the compound (B), those that can be available as commercially available products may be employed. Examples of such a compound (B) include the trade name "KAYAMER (registered trademark) PM-21" (manufactured by Nippon Kayaku Co., Ltd.) in terms of compatibility.

Examples of monomers (M) other than the compound (B) include a crosslinkable monomer and a monofunctional monomer. Monomers that react with terminal groups of the compound (A) and/or the compound (B) are preferable from the viewpoint of being able to better express the effects of the present invention.

Examples of crosslinkable monomers include multifunctional (meth)acrylates such as ethylene glycol di(meth)acrylate, polyethylene glycol di(meth)acrylate, and glycerol tri(meth)acrylate; multifunctional acrylamide derivatives such as N,N'-methylenebis(meth)acrylamide and N,N'-ethylenebis(meth)acrylamide; multifunctional allyl derivatives such as diallylamine and tetraaryloxyethane; and aromatic crosslinkable monomers such as divinylbenzene, divinylnaphthalene, and diallyl phthalate. From the viewpoint of being able to better express the effects of the present invention, crosslinkable monomers are preferably aromatic crosslinkable monomers and more preferably divinylbenzene. The crosslinkable monomers may be of only one type or two or more types.

Examples of monofunctional monomers include: 1-16C alkyl (meth)acrylates such as methyl (meth)acrylate, ethyl (meth)acrylate, butyl (meth)acrylate, and cetyl (meth)acrylate; aromatic monofunctional monomers such as styrene, α-methylstyrene, ethylvinylbenzene, vinyl toluene, o-chlorostyrene, m-chlorostyrene, p-chlorostyrene, vinylbiphenyl, and vinylnaphthalene; dicarboxylate monomers such as dimethylmaleate, diethylmaleate, dimethylfumarate, and diethylfumarate; maleic anhydride; N-vinylcarbazole; and (meth)acrylonitrile. From the viewpoint of being able to better express the effects of the present invention, monofunctional monomers are preferably aromatic monofunctional monomers and more preferably styrene and ethylvinylbenzene. The monofunctional monomers may be of only one type or two or more types.

As the reaction of the compound (A) with the monomer (M), any appropriate reaction can be performed within the scope not impairing the effects of the present invention. Such a reaction is preferably a suspension polymerization reaction.

When performing a suspension polymerization reaction, a polymerization reaction is typically performed by adding an oil phase to an aqueous phase and carrying out suspension. The aqueous phase or the oil phase may contain any appropriate solvent within the scope not impairing the effects of the present invention. Examples of such solvents include aqueous media and non-reactive solvents which will be described below. The solvents may be of only one type or two or more types.

When the reaction of the compound (A) with the monomer (M) is performed, any appropriate additive (C) that does not correspond to either the compound (A) or the monomer (M) may be used within the scope not impairing the effects of the present invention. The additive (C) may be of only one type or two or more types. The additive (C) referred to herein does not include dispersion stabilizers and solvents such as aqueous media and non-reactive solvents which will be described below.

The proportion of the additive (C) content based on the content of the compound (A) and the monomer (M) is preferably 0 weight% to 40 weight%, more preferably 0 weight% to 30 weight%, still more preferably 0 weight% to 20 weight%, and particularly preferably 0 weight% to 10 weight%.

As the additive (C), any appropriate additive that does not correspond to either the compound (A) or the monomer (M) can be employed within the scope not impairing the effects of the present invention. Examples of such an additive (C) include a non-crosslinkable polymer, a polymerization initiator, and a surfactant.

The inclusion of a non-crosslinkable polymer as the additive (C) promotes phase separation between a solvent and the polymer (P) formed as a reaction progresses, which can promote shell formation.

Examples of non-crosslinkable polymers include at least one selected from the group consisting of a polyolefin, a styrene polymer, a (meth)acrylic acid polymer, and a styrene-(meth)acrylic acid polymer.

Examples of polyolefins include polyethylene, polypropylene, and poly-α-olefin. From the viewpoint of solubility in a monomer composition, side-chain crystalline polyolefins using long-chain α-olefins as raw materials, and low-molecular-weight polyolefins or olefin oligomers produced with a metallocene catalyst are preferably used.

Examples of styrene polymers include polystyrene, styrene-acrylonitrile copolymers, and acrylonitrile-butadienestyrene copolymers.

Examples of (meth)acrylic acid polymers include polymethyl (meth)acrylate, polyethyl (meth)acrylate, polybutyl (meth)acrylate, and polypropyl (meth)acrylate.

Examples of styrene-(meth)acrylic acid polymers include styrene-methyl (meth)acrylate copolymers, styrene-ethyl (meth)acrylate copolymers, styrene-butyl (meth)acrylate copolymers, and styrene-propyl (meth)acrylate copolymers.

In the suspension polymerization reaction, a surfactant may be used as the additive (C) from the viewpoint of being able to more stably produce desired hollow resin particles. As the surfactant, from the viewpoint of being able to better express the effects of the present invention, at least one selected from an amphoteric surfactant and an anionic surfactant is preferable, and at least an amphoteric surfactant is more preferably selected. Specifically, at least one selected from an amphoteric surfactant and an anionic surfactant is preferably added to an aqueous phase containing an aqueous medium, and at least an amphoteric surfactant is more preferably added to an aqueous phase containing an aqueous medium (only an amphoteric surfactant is added thereto or both an amphoteric surfactant and an anionic surfactant are added thereto).

As amphoteric surfactants, any appropriate amphoteric surfactants can be employed within the scope not impairing the effects of the present invention. As such amphoteric surfactants, well-known amphoteric surfactants that can be used in production of resin particles can be used. Examples of amphoteric surfactants include lauryl dimethylamine oxide, betaine lauryl dimethylaminoacetate, phosphate surfactants, and phosphite surfactants. The amphoteric surfactants may be of only one type or two or more types.

As anionic surfactants, any appropriate anionic surfactants can be employed within the scope not impairing the effects of the present invention. Examples of such anionic surfactants include fatty acid salts, polysulfonates, polycarboxylates, alkyl sulfuric ester salts, alkyl aryl sulfonates, alkylnaphthalene sulfonates, dialkyl sulfonates, dialkyl sulfosuccinates, alkyl phosphates, polyoxyethylene alkyl ether sulfates, polyoxyethylene alkyl aryl ether sulfates, naphthalenesulfonic acid formalin condensates, polyoxyethylene alkyl sulfonates, polyoxyethylene alkyl phosphate, glycerol borate fatty acid esters, and polyoxyethylene glycerol fatty acid esters. Specific examples thereof include sodium dodecylbenzene sulfonate, sodium lauryl sulfate, sodium polyoxyethylene lauryl ether sulfate, ammonium polyoxyethylene lauryl ether sulfate, polyoxyethylene nonyl phenyl ether sulfuric ester salts, and sodium salts of β-naphthalenesulfonic acid formalin condensates. The anionic surfactants may be of only one type or two or more types.

The amount of surfactant used based on the 100 parts by weight of an aqueous medium is preferably within a range of 0.01 parts by weight to 0.3 parts by weight and more preferably within a range of 0.02 parts by weight to 0.2 parts by weight.

When the reaction of the compound (A) with the monomer (M) is performed, any appropriate dispersion stabilizer (D) that does not correspond to either the compound (A) or the monomer (M) may be used within the scope not impairing the effects of the present invention. The dispersion stabilizer (D) may be of only one type or two or more types.

The dispersion stabilizer (D) based on 100 parts by weight of an aqueous medium is preferably 0.5 parts by weight to 10 parts by weight. The dispersion stabilizer (D) may be of only one type or two or more types.

Examples of dispersion stabilizers (D) include inorganic water-soluble polymer compounds such as polyvinyl alcohol, polycarboxylic acids, celluloses (such as hydroxyethyl cellulose and carboxymethyl cellulose), polyvinyl pyrrolidone, and sodium tripolyphosphate. In addition, other examples of dispersion stabilizers include phosphates such as calcium phosphate, magnesium phosphate, aluminum phosphate, and zinc phosphate; pyrophosphates such as calcium pyrophosphate, magnesium pyrophosphate, aluminum pyrophosphate, and zinc pyrophosphate; and poorly water-soluble inorganic compounds such as calcium carbonate, magnesium carbonate, calcium hydroxide, magnesium hydroxide, aluminum hydroxide, calcium metasilicate, calcium sulfate, barium sulfate, and colloidal silica. Among these, magnesium pyrophosphate is preferable because it is relatively easily removed from hollow resin particles and does not remain on the surface of the hollow resin particles.

<Embodiment 2 of polymer (P)>

Another one preferred Embodiment 2 of the polymer (P) is a polymer having an ether structure represented by Formula (1), a phosphate structure, and elemental sulfur and preferably a polymer obtained through a reaction of a thiol with the polymer (AM) obtained through a reaction of a compound (A) having the ether structure represented by Formula (1) and a radical-reactive group with a monomer (M) that reacts with the compound (A), and the monomer (M) contains a compound (B) having the phosphate structure and the radical-reactive group. In other words, another one preferred Embodiment 2 of the polymer (P) is a polymer obtained through a reaction of the polymer (AM) with a thiol.

For the polymer (AM), the description in <Embodiment 1 of polymer (P)> can be used.

The reaction of the polymer (AM) with a thiol can be performed through any appropriate method within the scope not impairing the effects of the present invention as long as the method is employed for a reaction generally known as a thiol-ene reaction. Typically, the polymer (P) is obtained by mixing the polymer (AM) with a thiol, an initiator radical species and heating and stirring the mixture. In this case, the polymer (AM) to be reacted with a thiol may be reacted with a thiol in the form of a reaction mixture (typically a suspension) of the compound (A) and the monomer (M).

As thiols, any appropriate thiol can be employed within the scope not impairing the effects of the present invention as long as it is a thiol represented by R-SH (R is an alkyl group). Typically, the above-described alkyl group is preferably a 1-20C alkyl group having a linear or branched chain, more preferably a 4-16C alkyl group having a linear or branched chain, still more preferably a 6-12C alkyl group having a linear or branched chain, and particularly preferably an 8-10C alkyl group having a linear or branched chain. The thiol may be of only one type or two or more types.

By reacting the polymer (AM) with thiols, a thiol-ene reaction occurs between the thiols and vinyl groups of the polymer (AM), and at least some of the vinyl groups are converted into alkylthio groups, which reduces the amount of residual vinyl groups in the hollow resin particles and suppresses heat generated through thermal decomposition (for example, thermal decomposition at about 200°C to 300°C at a production process temperature of semiconductor members), thereby making it possible to express superior heat resistance. In addition, by reducing the amount of residual vinyl groups in the hollow resin particles, in addition to contribution to the improvement in heat resistance, a lower dielectric constant and a lower dielectric loss tangent can also be achieved.

### «1-3. Use of hollow resin particles»

The hollow resin particles according to the embodiment of the present invention can be employed in various uses. From the viewpoint of being able to better utilize the effects of the present invention, the hollow resin particles according to the embodiment of the present invention are suitable for semiconductor members, and can typically be suitably used in a resin composition for a semiconductor member. In addition to the above-described use for the resin composition for a semiconductor member, the hollow resin particles according to the embodiment of the present invention can also be applied to uses for, for example, paint compositions, cosmetic materials, paper coating compositions, insulating compositions (for example, thermal insulation resin composition), light diffusion compositions (for example, light diffusion resin compositions), and light diffusion films.

### <Resin composition for semiconductor member>

The hollow resin particles according to the embodiment of the present invention can achieve a low dielectric constant and a low dielectric loss tangent and can express excellent heat resistance, and therefore can be suitably used in a resin composition for a semiconductor member.

A resin composition for a semiconductor member according to an embodiment of the present invention contains the hollow resin particles according to the embodiment of the present invention.

Semiconductor members mean members constituting a semiconductor, and examples thereof include a semiconductor package and a semiconductor module. In the present specification, the resin composition for a semiconductor member means a resin composition used in semiconductor members.

A semiconductor package is composed of at least one component selected from a mold resin, an underfill material, a mold underfill material, a die bond material, a prepreg for a semiconductor package substrate, a metal-clad laminated plate for a semiconductor package substrate, and a build-up material for a printed circuit board for a semiconductor package, with an IC chip as an essential constituent member.

A semiconductor module is composed of at least one component selected from a prepreg for a printed circuit board, a metal-clad laminated plate for a printed circuit board, a build-up material for a printed circuit board, a solder resist material, a coverlay film, an electromagnetic wave shielding film, and an adhesive sheet for a printed circuit board, with a semiconductor package as an essential constituent member.

### <Paint composition>

The hollow resin particles according to the embodiment of the present invention can be suitably used in a paint composition because they can impart an excellent appearance to paint films containing them.

A paint composition according to an embodiment of the present invention contains the hollow resin particles according to the embodiment of the present invention.

The paint composition according to the embodiment of the present invention preferably contains at least one selected from a binder resin and a UV curable resin. The binder resin may be of only one type or two or more types. The UV curable resin may be of only one type or two or more types.

As binder resins, any appropriate binder resins can be employed within the scope not impairing the effects of the present invention. Examples of such binder resins include resins that are soluble in organic solvents or water and emulsion-type aqueous resins that can be dispersed in water. Specific examples of binder resins include acrylic resins, alkyd resins, polyester resins, polyurethane resins, chlorinated polyolefin resins, and amorphous polyolefin resins.

As UV curable resins, any appropriate UV curable resins can be employed within the scope not impairing the effects of the present invention. Examples of such UV curable resins include polyfunctional (meth)acrylate resins and polyfunctional urethane acrylate resins, and polyfunctional (meth)acrylate resins are preferable and polyfunctional (meth)acrylate resins having three or more (meth)acryloyl groups in one molecule are more preferable. Specific examples of polyfunctional (meth)acrylate resins having three or more (meth)acryloyl groups in one molecule include trimethylolpropane tri(meth)acrylate, trimethylolethane tri(meth)acrylate, 1,2,4-cyclohexane tetra(meth)acrylate, pentaglycerol triacrylate, pentaerythritol tetra(meth)acrylate, pentaerythritol tri(meth)acrylate, dipentaerythritol triacrylate, dipentaerythritol pentaacrylate, dipentaerythritol tetra(meth)acrylate, dipentaerythritol hexa(meth)acrylate, tripentaerythritol triacrylate, and tripentaerythritol hexaacrylate.

When the paint composition according to the embodiment of the present invention contains at least one selected from a binder resin and a UV curable resin, any appropriate content proportion can be employed according to the purpose. Typically, the content of the hollow resin particles according to the embodiment of the present invention based on the total amount of the hollow resin particles according to the embodiment of the present invention and at least one selected from a UV curable resin and a binder resin (in terms of solid content in a case of an emulsion-type aqueous resin) is preferably 5 weight% to 50 weight%, more preferably 10 weight% to 50 weight%, and still more preferably 20 weight% to 40 weight%.

When a UV curable resin is used, a photopolymerization initiator is preferably combined therewith. As photopolymerization initiators, any appropriate photopolymerization initiators can be employed within the scope not impairing the effects of the present invention. Examples of such photopolymerization initiators include acetophenones, benzoins, benzophenones, phosphine oxides, ketals, α-hydroxyalkylphenones, α-aminoalkylphenones, anthraquinones, thioxanthones, azo compounds, peroxides (disclosed in Japanese Patent Application Publication No. 2001-139663 or the like), 2,3-dialkyldione compounds, disulfide compounds, fluoroamine compounds, aromatic sulfoniums, onium salts, borate salts, active halogen compounds, and α-acyl oxime esters.

The paint composition according to the embodiment of the present invention may contain a solvent. The solvent may be of only one type or two or more types. If the paint composition according to the embodiment of the present invention contains a solvent, any appropriate content proportion can be employed according to the purpose.

As solvents, any appropriate solvents can be employed within the scope not impairing the effects of the present invention. Such solvents are preferably solvents that can dissolve or disperse binder resins or UV curable resins. Examples of such solvents for oil-based paints include hydrocarbon-based solvents such as toluene and xylene; ketone-based solvents such as methyl ethyl ketone and methyl isobutyl ketone; ester-based solvents such as ethyl acetate and butyl acetate; and ether-based solvents such as dioxane, ethylene glycol diethyl ether, and ethylene glycol monobutyl ether, and examples thereof for water-based paints include water and alcohols.

The paint composition according to the embodiment of the present invention may be diluted to adjust viscosity as necessary. As diluents, any appropriate diluents can be employed according to the purpose. Examples of such diluents include the aforementioned solvents. The diluents may be of only one type or two or more types.

The paint composition according to the embodiment of the present invention may contain, as necessary, other components, for example, a coated surface adjuster, a fluidity adjuster, an ultraviolet absorber, a light stabilizer, a curing catalyst, an extender pigment, a coloring pigment, a metal pigment, a mica powder pigment, and dyes.

In a case of forming a paint film using the paint composition according to the embodiment of the present invention, any appropriate coating methods can be employed according to the purpose. Examples of such coating methods include a roll coating method, a brush coating method, a reverse roll coating method, a gravure coating method, a die coating method, a comma coating method, and a spray coating method.

In a case of forming a paint film using the paint composition according to the embodiment of the present invention, any appropriate formation methods can be employed according to the purpose. Examples of such formation methods include a method for forming a paint film by coating any coating surface of a base material to produce a paint film, drying this paint film, and then curing the paint film as necessary. Examples of base materials include a metal, wood, glass, plastic (such as polyethylene terephthalate (PET), polycarbonate (PC), an acrylic resin, and triacetyl cellulose (TAC)) .

### <Thermal insulation resin composition>

The hollow resin particles according to the embodiment of the present invention can be suitably used in a thermal insulation resin composition because they can impart excellent thermal insulation to a paint film containing them. The paint film containing the hollow resin particles according to the embodiment of the present invention can express excellent reflectance within a range of wavelengths from ultraviolet light to near-infrared light.

A thermal insulation resin composition according to an embodiment of the present invention contains the hollow resin particles according to the embodiment of the present invention.

The thermal insulation resin composition according to the embodiment of the present invention preferably contains at least one selected from a binder resin and a UV curable resin. For binder resins and UV curable resins, the description of the aforementioned paint composition can be used.

The thermal insulation resin composition according to the embodiment of the present invention may contain a solvent. For solvents, the description of the aforementioned paint composition can be used.

The thermal insulation resin composition according to the embodiment of the present invention may be diluted to adjust viscosity as necessary. For diluents, the description of the aforementioned paint composition can be used.

The thermal insulation resin composition according to the embodiment of the present invention may contain, as necessary, other components, for example, a coated surface adjuster, a fluidity adjuster, an ultraviolet absorber, a light stabilizer, a curing catalyst, an extender pigment, a coloring pigment, a metal pigment, a mica powder pigment, and dyes.

For coating methods and formation methods when forming a paint film using the thermal insulation resin composition according to the embodiment of the present invention, the description of the aforementioned paint composition can be used.

### <Light diffusion resin composition>

The hollow resin particles according to the embodiment of the present invention can be suitably used in a light diffusion resin composition because they can impart excellent light diffusibility to a paint film containing them.

A light diffusion resin composition according to an embodiment of the present invention contains the hollow resin particles according to the embodiment of the present invention.

The light diffusion resin composition according to the embodiment of the present invention preferably contains at least one selected from a binder resin and a UV curable resin. For binder resins and UV curable resins, the description of the aforementioned paint composition can be used.

The light diffusion resin composition according to the embodiment of the present invention may contain a solvent. For solvents, the description of the aforementioned paint composition can be used.

The light diffusion resin composition according to the embodiment of the present invention may be diluted to adjust viscosity as necessary. For diluents, the description of the aforementioned paint composition can be used.

The light diffusion resin composition according to the embodiment of the present invention may contain, as necessary, other components, for example, a coated surface adjuster, a fluidity adjuster, an ultraviolet absorber, a light stabilizer, a curing catalyst, an extender pigment, a coloring pigment, a metal pigment, a mica powder pigment, and dyes.

For coating methods and formation methods when forming a paint film using the light diffusion resin composition according to the embodiment of the present invention, the description of the aforementioned paint composition can be used.

### <Light diffusion film>

The hollow resin particles according to the embodiment of the present invention can also be suitably used in a light diffusion film because they can impart excellent light diffusibility to a film with a paint film containing them.

A light diffusion film according to an embodiment of the present invention contains the hollow resin particles according to the embodiment of the present invention.

The light diffusion film according to the embodiment of the present invention includes a base material and a light diffusion layer formed from the light diffusion resin composition according to the embodiment of the present invention. The light diffusion layer may or may not be the outermost layer of the light diffusion film. The light diffusion film according to the embodiment of the present invention may include any other appropriate layers according to the purpose. Examples of such other layers include a protective layer, a hard coat layer, a planarization layer, a high refractive index layer, an insulating layer, a conductive resin layer, a conductive metal particulate layer, a conductive metal oxide particulate layer, and a primer layer.

Examples of base materials include a metal, wood, glass, a plastic film, a plastic sheet, a plastic lens, a plastic panel, a cathode-ray tube, a fluorescent display tube, and a liquid crystal display panel. Examples of plastic constituting a plastic film, a plastic sheet, a plastic lens, and a plastic panel include polyethylene terephthalate (PET), polycarbonate (PC), an acrylic resin, and triacetyl cellulose (TAC).

### ««2. Method for producing hollow resin particle»»

Preferred examples of methods for producing hollow resin particles according to the embodiment of the present invention include the following two embodiments.
(1) Embodiment 1 of production method: 20 parts by weight to 80 parts by weight of a compound (A) having an ether structure represented by Formula (1) and a radical-reactive group is reacted with 80 parts by weight to 20 parts by weight of a monomer (M) that reacts with the compound (A) (a total amount of the compound (A) and the monomer (M) being set to 100 parts by weight) in an aqueous medium in the presence of a non-reactive solvent, and the monomer (M) contains a compound (B) having a phosphate structure and the radical-reactive group. 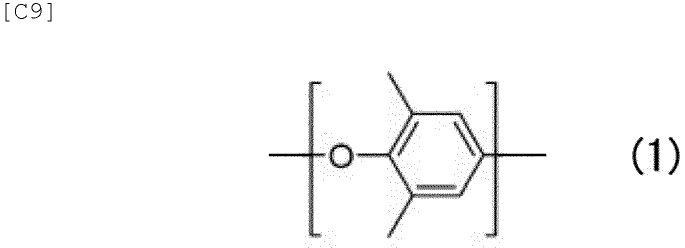
(2) Embodiment 2 of production method: This includes an oil phase preparation step (I) of mixing 20 parts by weight to 80 parts by weight of a compound (A) having an ether structure represented by Formula (1) and a radical-reactive group and 80 parts by weight to 20 parts by weight of a monomer (M) that reacts with the compound (A) (a total amount of the compound (A) and the monomer (M) being set to 100 parts by weight) with a non-reactive solvent to prepare an oil phase; a suspension polymerization step (II) of adding the oil phase to an aqueous phase containing an aqueous medium and stirring the mixture to prepare a suspension; and a thiol-ene reaction step (III) of adding a thiol to the suspension to cause a reaction and prepare a reactant.

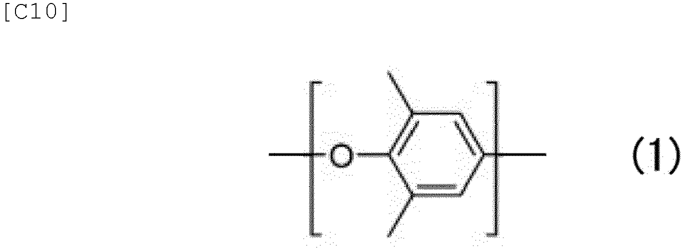

According to the above-described production method, preferably, the hollow resin particles according to the embodiment of the present invention can be preferably simply produced.

### <Embodiment 1 of production method>

In one preferred Embodiment 1 of the method for producing a hollow resin particle of the present invention, 20 parts by weight to 80 parts by weight of a compound (A) having an ether structure represented by Formula (1) and a radical-reactive group is reacted with 80 parts by weight to 20 parts by weight of a monomer (M) that reacts with the compound (A) (a total amount of the compound (A) and the monomer (M) being set to 100 parts by weight) in an aqueous medium in the presence of a non-reactive solvent, and the monomer (M) contains a compound (B) having a phosphate structure and the radical-reactive group.

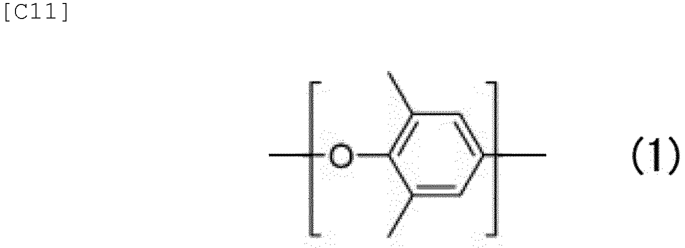

According to the above-described production method 1, typically, hollow resin particles which include a shell portion and a hollow portion surrounded by the shell portion and in each of which the shell portion contains a polymer (P) having an ether structure represented by Formula (1) and a phosphate structure are obtained, the polymer (P) is preferably a polymer (AM) obtained through a reaction of a compound (A) having the ether structure represented by Formula (1) and a radical-reactive group with a monomer (M) that reacts with the compound (A), and the monomer (M) contains a compound (B) having the phosphate structure and the radical-reactive group.

By reacting the compound (A) with the monomer (M) in an aqueous medium in the presence of a non-reactive solvent, the hollow resin particles according to the embodiment of the present invention can be obtained. Typically, the hollow resin particles according to the embodiment of the present invention can be produced by subjecting the compound (A) and the monomer (M) to a suspension polymerization reaction.

The suspension polymerization is typically suspension polymerization using an aqueous phase containing an aqueous medium and an oil phase containing the compound (A), the monomer (M), and a non-reactive solvent. Preferably, the aqueous phase containing an aqueous medium is added to the oil phase containing the compound (A), the monomer (M), and the non-reactive solvent, which is dispersed and heated for suspension polymerization.

For dispersion, any appropriate dispersion method can be employed within the scope not impairing the effects of the present invention as long as the oil phase can be present in the form of droplets in the aqueous phase. Typical such dispersion methods include dispersion methods using a homomixer or a homogenizer, and examples thereof include a polytron homogenizer, an ultrasound homogenizer, and a high-pressure homogenizer.

Any appropriate polymerization temperature can be employed within the scope not impairing the effects of the present invention as long as the temperature is suitable for suspension polymerization. Such polymerization temperature is preferably 30°C to 80°C.

Any appropriate polymerization time can be employed within the scope not impairing the effects of the present invention as long as the time is suitable for suspension polymerization. Such polymerization time is preferably 1 hour to 48 hours.

Post-heating, preferably performed after polymerization, is a suitable treatment to obtain hollow resin particles with a high degree of perfection.

As the temperature for post-heating, preferably performed after polymerization, any appropriate temperature can be employed within the scope not impairing the effects of the present invention. Such post-heating temperature is preferably 70°C to 120°C.

As the time for post-heating, preferably performed after polymerization, any appropriate time can be employed within the scope not impairing the effects of the present invention. Such post-heating time is preferably 1 hour to 24 hours.

For the compound (A) and the monomer (M), the description in the section «1-2. Shell portion» of ««1. Hollow resin particles»» can be used as it is.

Examples of aqueous media include water and a mixed medium of water and a lower alcohol (such as methanol or ethanol).

Any appropriate amount of aqueous medium used can be employed within the scope not impairing the effects of the present invention. The amount of such an aqueous medium used is typically an amount by which a reaction proceeds appropriately in a suspension polymerization reaction in which an oil phase is added to an aqueous phase for suspension, and is, based on 100 parts by weight of a total amount of the compound (A), the monomer (M), and the non-reactive solvent, preferably 100 parts by weight to 5,000 parts by weight and more preferably 150 parts by weight to 2,000 parts by weight.

The non-reactive solvent is a solvent that does not chemically react with either the compound (A) or the monomer (M), and is preferably an organic solvent. The non-reactive solvent typically acts as a hollowing agent that provides an air space to particles. Examples of non-reactive solvents include heptane, hexane, toluene, cyclohexane, methyl acetate, ethyl acetate, methyl ethyl ketone, chloroform, and carbon tetrachloride. The boiling point of the non-reactive solvent is preferably lower than 100°C in terms of ease of removal from the hollow resin particles.

The non-reactive solvent as a hollowing agent may be a single solvent or a mixed solvent.

The amount of non-reactive solvent added based on 100 parts by weight of a total amount of the compound (A) and the monomer (M) is preferably 20 parts by weight to 250 parts by weight.

When the reaction of the compound (A) with the monomer (M) is performed, any appropriate additive (C) that does not correspond to either the compound (A) or the monomer (M) may be used within the scope not impairing the effects of the present invention. The additive (C) may be of only one type or two or more types. The additive (C) referred to herein does not include dispersion stabilizers and solvents such as aqueous media and non-reactive solvents.

The proportion of the additive (C) content based on the content of the compound (A) and the monomer (M) is preferably 0 weight% to 40 weight%, more preferably 0 weight% to 30 weight%, still more preferably 0 weight% to 20 weight%, and particularly preferably 0 weight% to 10 weight%.

As the additive (C), any appropriate additive that does not correspond to either the compound (A) or the monomer (M) can be employed within the scope not impairing the effects of the present invention. Examples of such an additive (C) include a non-crosslinkable polymer and a polymerization initiator.

For the non-crosslinkable polymer, the description in the section «1-2. Shell portion» of ««1. Hollow resin particles»» can be used as it is.

As polymerization initiators, any appropriate polymerization initiators can be employed within the scope not impairing the effects of the present invention. Examples of such polymerization initiators include: organic peroxides such as lauroyl peroxide, benzoyl peroxide, orthochlorobenzoyl peroxide, orthomethoxybenzoyl peroxide, 3,5,5-trimethylhexanoyl peroxide, t-butylperoxy-2-ethylhexanoate, and di-t-butyl peroxide; and azo compounds such as 2,2'-azobisisobutyronitrile, 1,1'-azobiscyclohexanecarbonitrile, and 2,2'-azobis(2,4-dimethylvaleronitrile).

The proportion of the polymerization initiator content based on the total amount of the compound (A) and the monomer (M) is preferably within a range of 0.1 weight% to 5 weight%. The polymerization initiator may be of only one type or two or more types.

When the reaction of the compound (A) with the monomer (M) is performed, any appropriate dispersion stabilizer (D) that does not correspond to either the compound (A) or the monomer (M) may be used within the scope not impairing the effects of the present invention. The dispersion stabilizer (D) may be of only one type or two or more types.

The dispersion stabilizer (D) based on 100 parts by weight of an aqueous medium is preferably 0.5 parts by weight to 10 parts by weight. The dispersion stabilizer (D) may be of only one type or two or more types.

For specific examples of the dispersion stabilizer (D), the description in the section «1-2. Shell portion» of ««1. Hollow resin particles»» can be used as it is.

### <Embodiment 2 of production method>

Another one preferred Embodiment 2 of the method for producing a hollow resin particle of the present invention includes: an oil phase preparation step (I) of mixing 20 parts by weight to 80 parts by weight of a compound (A) having an ether structure represented by Formula (1) and a radical-reactive group and 80 parts by weight to 20 parts by weight of a monomer (M) that reacts with the compound (A) (a total amount of the compound (A) and the monomer (M) being set to 100 parts by weight) with a non-reactive solvent to prepare an oil phase; a suspension polymerization step (II) of adding the oil phase to an aqueous phase containing an aqueous medium and stirring the mixture to prepare a suspension; and a thiol-ene reaction step (III) of adding a thiol to the suspension to cause a reaction and prepare a reactant.

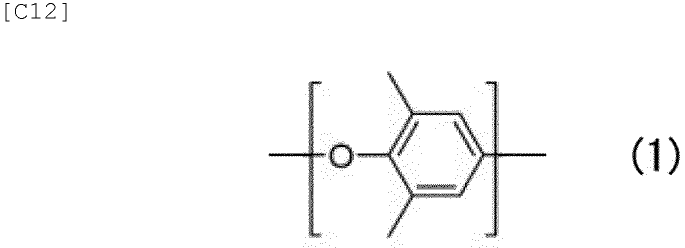

According to the above-described production method 2, typically, hollow resin particles which include a shell portion and a hollow portion surrounded by the shell portion and in each of which the shell portion contains a polymer (P) having an ether structure represented by Formula (1), a phosphate structure, and elemental sulfur are obtained, the polymer (P) is preferably a polymer obtained through a reaction of a thiol with the polymer (AM) obtained through a reaction of a compound (A) having the ether structure represented by Formula (1) and a radical-reactive group with a monomer (M) that reacts with the compound (A), and the monomer (M) contains a compound (B) having the phosphate structure and the radical-reactive group.

In the oil phase preparation step (I), 20 parts by weight to 80 parts by weight of the compound (A) and 80 parts by weight to 20 parts by weight of the monomer (M) (the total amount of the compound (A) and the monomer (M) being set to 100 parts by weight) are mixed with a non-reactive solvent to prepare an oil phase.

The ratio of the compound (A) to the monomer (M) when the total amount of the compound (A) and the monomer (M) is set to 100 parts by weight (compound (A):monomer (M)) is preferably (20 parts by weight to 80 parts by weight):(80 parts by weight to 20 parts by weight), more preferably (20 parts by weight to 70 parts by weight):(80 parts by weight to 30 parts by weight), still more preferably (25 parts by weight to 60 parts by weight):(75 parts by weight to 40 parts by weight), and particularly preferably (30 parts by weight to 50 parts by weight):(70 parts by weight to 50 parts by weight) in parts by weight. There is a concern that, if the proportion of the compound (A) content is too small outside the above-described ranges, the heat resistance will become insufficient. There is a concern that, if the proportion of the compound (A) content is too large outside the above-described ranges, it will be difficult to form a shell portion and a hollow portion surrounded by the shell portion.

For the compound (A) and the monomer (M), the description in the section «1-2. Shell portion» of ««1. Hollow resin particles»» can be used as it is.

The non-reactive solvent is a solvent that does not chemically react with either the compound (A) or the monomer (M), and is preferably an organic solvent. The non-reactive solvent typically acts as a hollowing agent that provides an air space to particles. Examples of non-reactive solvents include heptane, hexane, toluene, cyclohexane, methyl acetate, ethyl acetate, methyl ethyl ketone, chloroform, and carbon tetrachloride. The boiling point of the non-reactive solvent is preferably lower than 100°C in terms of ease of removal from the hollow resin particles.

The non-reactive solvent as a hollowing agent may be a single solvent or a mixed solvent.

The amount of non-reactive solvent added based on 100 parts by weight of a total amount of the compound (A) and the monomer (M) is preferably 20 parts by weight to 250 parts by weight.

When the reaction of the compound (A) with the monomer (M) is performed, any appropriate additive (C) that does not correspond to either the compound (A) or the monomer (M) may be used within the scope not impairing the effects of the present invention. The additive (C) may be of only one type or two or more types. The additive (C) referred to herein does not include dispersion stabilizers and solvents such as aqueous media and non-reactive solvents.

The proportion of the additive (C) content based on the content of the compound (A) and the monomer (M) is preferably 0 weight% to 40 weight%, more preferably 0 weight% to 30 weight%, still more preferably 0 weight% to 20 weight%, and particularly preferably 0 weight% to 10 weight%.

As the additive (C), any appropriate additive that does not correspond to either the compound (A) or the monomer (M) can be employed within the scope not impairing the effects of the present invention. Examples of such an additive (C) include a non-crosslinkable polymer and a polymerization initiator.

For the non-crosslinkable polymer, the description in the section «1-2. Shell portion» of ««1. Hollow resin particles»» can be used as it is.

As polymerization initiators, any appropriate polymerization initiators can be employed within the scope not impairing the effects of the present invention. Examples of such polymerization initiators include: organic peroxides such as lauroyl peroxide, benzoyl peroxide, orthochlorobenzoyl peroxide, orthomethoxybenzoyl peroxide, 3,5,5-trimethylhexanoyl peroxide, t-butylperoxy-2-ethylhexanoate, and di-t-butyl peroxide; and azo compounds such as 2,2'-azobisisobutyronitrile, 1,1'-azobiscyclohexanecarbonitrile, and 2,2'-azobis(2,4-dimethylvaleronitrile).

The proportion of the polymerization initiator content based on the total amount of the compound (A) and the monomer (M) is preferably within a range of 0.1 weight% to 5 weight%. The polymerization initiator may be of only one type or two or more types.

In the suspension polymerization step (II), the oil phase obtained in the oil phase preparation step (I) is added to an aqueous phase containing an aqueous medium, and the mixture is stirred to prepare a suspension.

Examples of aqueous media include water and a mixed medium of water and a lower alcohol (such as methanol or ethanol).

Any appropriate amount of aqueous medium used can be employed within the scope not impairing the effects of the present invention. The amount of such an aqueous medium used is typically an amount by which a reaction proceeds appropriately in a suspension polymerization reaction in which an oil phase is added to an aqueous phase for suspension, and is, based on 100 parts by weight of a total amount of the compound (A), the monomer (M), and the non-reactive solvent, preferably 100 parts by weight to 5,000 parts by weight and more preferably 150 parts by weight to 2,000 parts by weight.

In the suspension polymerization step (II), any appropriate dispersion stabilizer (D) that does not correspond to either the compound (A) or the monomer (M) may be contained in the aqueous phase containing an aqueous medium within the scope not impairing the effects of the present invention. The dispersion stabilizer (D) may be of only one type or two or more types.

The dispersion stabilizer (D) based on 100 parts by weight of an aqueous medium is preferably 0.5 parts by weight to 10 parts by weight.

For specific examples of the dispersion stabilizer (D), the description in the section «1-2. Shell portion» of ««1. Hollow resin particles»» can be used as it is.

For dispersion, any appropriate dispersion method can be employed within the scope not impairing the effects of the present invention as long as the oil phase can be present in the form of droplets in the aqueous phase. Typical such dispersion methods include dispersion methods using a homomixer or a homogenizer, and examples thereof include a polytron homogenizer, an ultrasound homogenizer, and a high-pressure homogenizer.

Any appropriate polymerization temperature can be employed within the scope not impairing the effects of the present invention as long as the temperature is suitable for suspension polymerization. Such polymerization temperature is preferably 30°C to 80°C.

Any appropriate polymerization time can be employed within the scope not impairing the effects of the present invention as long as the time is suitable for suspension polymerization. Such polymerization time is preferably 1 hour to 48 hours.

Post-heating may be performed after polymerization. When post-heating after polymerization is performed, it is possible to obtain hollow resin particles with a higher degree of perfection. As the post-heating temperature, any appropriate temperature can be employed within the scope not impairing the effects of the present invention. Such post-heating temperature is preferably 70°C to 120°C.

As the post-heating time, any appropriate time can be employed within the scope not impairing the effects of the present invention. Such post-heating time is preferably 1 hour to 24 hours.

Post-heating may be performed in the following thiol-ene reaction step (III).

In the above-described suspension polymerization step (II), the resulting suspension contains the polymer (AM) obtained through a reaction of the compound (A) with the monomer (M).

In the thiol-ene reaction step (III), a thiol is added to the suspension obtained in the suspension polymerization step (II) and reacted therewith to prepare a reactant.

In the thiol-ene reaction step (III), a thiol-ene reaction occurs between the thiol and the polymer (AM) contained in the suspension obtained in the suspension polymerization step (II). The thiol-ene reaction of the polymer (AM) with a thiol can be performed through any appropriate method within the scope not impairing the effects of the present invention as long as the method is employed for a reaction generally known as a thiol-ene reaction. Typically, a reactant is obtained by mixing the polymer (AM) with a thiol, an initiator, and a radical species and heating and stirring the mixture.

As the conditions in the thiol-ene reaction step (III), any appropriate conditions may be employed within the scope not impairing the effects of the present invention.

In the thiol-ene reaction step (III), a polymerization initiator may be used for the purpose of promoting a reaction. Specific examples of polymerization initiators include: azo polymerization initiators such as 2,2'-azobis-2,4-dimethylvaleronitrile and 2,2'-azobisisobutyronitrile; and peroxide polymerization initiators such as benzoyl peroxide, lauroyl peroxide, octanoyl peroxide, methyl ethyl ketone peroxide, propyl peroxydicarbonate, cumene hydroperoxide, and t-butyl hydroperoxide. These polymerization initiators may be of only one type or two or more types.

As the heating temperature in the thiol-ene reaction step (III), any appropriate temperature can be employed within the scope not impairing the effects of the present invention. The temperature for such heating is preferably a temperature at which 99% or more of a polymerization initiator used decomposes.

As the heating time in the thiol-ene reaction step (III), any appropriate time can be employed within the scope not impairing the effects of the present invention. The time for such heating is preferably a time at which 99% or more of a polymerization initiator used decomposes.

For thiols, the description in the section «1-2. Shell portion» of ««1. Hollow resin particles»» can be used as it is.

By reacting the polymer (AM) with thiols, a thiol-ene reaction occurs between the thiols and vinyl groups of the polymer (AM), and at least some of the vinyl groups are converted into alkylthio groups, which reduces the amount of residual vinyl groups in the hollow resin particles and suppresses heat generated through thermal decomposition (for example, thermal decomposition at about 200°C to 300°C at a production process temperature of semiconductor members), thereby making it possible to express superior heat resistance. In addition, by reducing the amount of residual vinyl groups in the hollow resin particles, in addition to contribution to the improvement in heat resistance, a lower dielectric constant and a lower dielectric loss tangent can also be achieved.

The methods for producing hollow resin particles according to the embodiment of the present invention may include any other appropriate steps within the scope not impairing the effects of the present invention as long as they include the oil phase preparation step (I), the suspension polymerization step (II), and the thiol-ene reaction step (III). Examples of such other steps include a washing step.

### [Examples]

Hereinafter, the present invention will be described specifically with reference to examples, but the present invention is not limited to these examples. Unless otherwise specified, "parts" means "parts by weight" and "%" means "weight%."

### «Measurement of volume average particle diameter and coefficient of variation»

The volume average particle diameter of particles were measured through the Coulter method as follows.
The volume average particle diameter of particles was measured using Coulter Multisizer (registered trademark) 3 (measurement device manufactured by Beckman Coulter Inc.). The measurement was performed using an aperture calibrated according to the Multisizer (registered trademark) 3 User's Manual, published by Beckman Coulter Inc. An aperture used for the measurement was appropriately selected depending on the size of particles to be measured. For example, when the assumed volume average particle diameter of particles to be measured is 1 um or larger and 10 um or smaller, an aperture with a size of 50 um is selected. When the assumed volume average particle diameter of particles to be measured is larger than 10 um and 30 um or smaller, an aperture with a size of 100 um is selected. When the assumed volume average particle diameter of particles is larger than 30 um and 90 um or smaller, an aperture with a size of 280 um is selected. When the assumed volume average particle diameter of particles is larger than 90 um and 150 um or smaller, an aperture with a size of 400 um is selected. When the volume average particle diameter after measurement differed from the assumed volume average particle diameter, the aperture was changed to an aperture with an appropriate size and measurement was performed again. The Current (aperture current) and the Gain were appropriately set depending on the size of a selected aperture. For example, when an aperture with a size of 50 um was selected, the Current (aperture current) was set to -800 and the Gain was set to 4. When an aperture with a size of 100 um was selected, the Current (aperture current) was set to -1,600 and the Gain was set to 2. When apertures with sizes of 280 um and 400 um were selected, the Current (aperture current) was set to - 3,200 and the Gain was set to 1.

As a specimen for measurement, a dispersion obtained by dispersing 0.1 g of particles in 10 mL of a 0.1 weight% nonionic surfactant aqueous solution using a touch mixer (manufactured by Yamato Scientific Co., Ltd., "Touch Mixer MT-31") and an ultrasonic cleaner (manufactured by Velvo-Clear, "Ultrasonic Cleaner VS-150") was used. During the measurement, the contents of a beaker were gently stirred to prevent air bubbles from entering, and the measurement was terminated when 100,000 particles were measured. The volume average particle diameter of the particles was set to an arithmetic average in a volume-based particle size distribution of the 100,000 particles.

The coefficient of variation (CV value) of particle diameter of the particles was calculated by the following equation. Coefficient of variation of particle diameter of particles (%)=(standard deviation of volume-based particle size distribution of particles/volume average particle diameter of particles)×100 (%)

### «Cross-section observation»

Dried particles were mixed with a photocurable resin "D-800" (JEOL Ltd.) and irradiated with ultraviolet light to obtain a cured product. Thereafter, the cured product was cut with nippers, the cross-sectional portion was smoothed using a cutter, and a specimen was coated using a sputtering device "Auto Fine Coater JFC-1300" manufactured by JEOL Ltd. Subsequently, the cross section of the specimen was imaged using a secondary electron detector of "SU1510" Scanning Electron Microscope manufactured by Hitachi High-Technologies Corporation.

### «Measurement of 5% weight reduction temperature when temperature is raised at 10°C/min in nitrogen atmosphere (Examples 1 to 7 and Comparative Examples 1 to 3)»

The 5% weight reduction temperature was measured using a simultaneous thermogravimetric-differential thermal analyzer "TG/DTA 6200, AST-2" manufactured by SII NanoTechnology Inc. A sampling method and temperature conditions were as follows.

The bottom of a platinum measurement container was filled with 10.5 ± 0.5 mg of the specimen so that there were no gaps, which was used as a measurement sample. Under a nitrogen gas flow rate of 230 mL/min, the 5% weight reduction temperature was measured using alumina as a reference material. A TG/DTA curve was obtained by increasing the temperature of the sample from 30°C to 500°C at a temperature increase rate of 10°C/min. From the obtained curve, the temperature at 5% weight reduction was calculated using analysis software provided with the device, which was used as a 5% weight reduction temperature.

### «Measurement of exothermic onset temperature and 5% weight reduction temperature when temperature is raised at 10°C/min in nitrogen atmosphere (Examples 8 to 17 and Comparative Examples 4 and 5)»

The 5% weight reduction temperature and exothermic onset temperature were measured using a simultaneous thermogravimetric-differential thermal analyzer "NEXTA STA200RV" manufactured by Hitachi High-Tech Science Corporation. A sampling method and temperature conditions were as follows. The bottom of a platinum measurement container was filled with 10.5 ± 0.5 mg of the specimen so that there were no gaps, which was used as a measurement sample. A TG/DSC curve was obtained by increasing the temperature of the sample from 30°C to 800°C at a temperature increase rate of 10°C/min. Alumina was used as a reference material. The 5% weight reduction temperature was determined from the obtained TG curve under a nitrogen gas flow rate of 300 mL/min using analysis software provided with the device. Specifically, the temperature at which the sample weight decreased by 5% relative to the sample weight at the start of measurement was regarded as a 5% weight reduction temperature. The exothermic onset temperature was determined from the obtained DSC curve under an air gas flow rate of 200 mL/min and a nitrogen gas flow rate of 100 mL/min as a protective gas using analysis software provided with the device. Specifically, an intersection of a baseline on the low temperature side and a tangent at a point of the maximum slope at the rise of the exothermic peak in the DSC curve was determined. The temperature at this intersection was regarded as an exothermic onset temperature. However, if there were a plurality of exothermic peaks, the peak on the lowest temperature side was used.

### «Measurement of elemental phosphorus content and elemental magnesium content»

The elemental phosphorus content and the elemental magnesium content were measured using a multitype ICP optical emission spectrometer (ICPE-9000 manufactured by Shimadzu Corporation). About 1.0 g of particles were weighed and, and the weighed particles were ashed by heating them at 450°C for 3 hours using an electric furnace (a muffle furnace "STR-15K" manufactured by ISUZU Seisakusho). The ashed particles were dissolved in 2 mL of concentrated hydrochloric acid and diluted to 50 mL with distilled water to obtain a measurement specimen. Thereafter, the measurement specimen was subjected to the above-described measurement with the multitype ICP optical emission spectrometer under the following measurement conditions to obtain a peak intensity at the wavelength of each element (Mg, P). Subsequently, the concentration (µg/mL) of each element (Mg, P) in the measurement specimen was calculated based on a calibration curve for quantification created from the peak intensity at the wavelength of the obtained each element (Mg, P) through the following calibration curve preparation method. The calculated concentration Tc (µg/mL) of each element (Mg, P) and the weight W (g) of the above-weighed particles were then substituted into the following equation to calculate the amount of each element in the particles.

### Elemental content (µg/g)=(Tc (µg/mL)/W (g))×50 (mL)

### <Measurement conditions>

Measurement wavelength: Mg (285.213 nm), P (177.499 nm)
Observation direction: Axial direction
High frequency output: 1.20 kW
Carrier flow rate: 0.7 L/min
Plasma flow rate: 10.0 L/min
Auxiliary flow rate: 0.6 L/min
Exposure time: 30 seconds

### <Calibration curve preparation method>

A calibration curve standard solution ("XSTC-13 (general-purpose mixed standard solution)" manufactured by SPEX CertiPrep, USA, and an element mixture (5% HNO₃ base)-about 10 mg/L each) were prepared through stepwise dilution with distilled water to prepare standard solutions at concentrations of 0 ppm (blank), 0.2 ppm, 1 ppm, 2.5 ppm, and 5 ppm, respectively. The standard solutions at each concentration were measured using the above-described multitype ICP optical emission spectrometer under the above-described measurement conditions to obtain a peak intensity at the wavelength of each element (Mg, P). For each element (Mg, P), the concentrations and the peak intensities were plotted, an approximation line (a linear line or a quadratic line) was obtained through a least-squares method, and the obtained approximation line was used as a calibration curve for quantification.

### «Sulfur atom content in particles measured by X-ray fluorescence»

The sulfur atom content in particles was determined through an order analysis method of X-ray fluorescence analysis. Specifically, an X-ray fluorescence measurement device "ZSX Primus IV" manufactured by Rigaku Corporation was used to measure the sulfur intensity under the following conditions, and the sulfur atom content in particles was obtained through the order analysis method. For a sample preparation method, about 20 mg of a specimen was weighed into a container for a trace amount of powder (33990051 manufactured by Rigaku Corporation), covered with a PP film (3399G003 manufactured by Rigaku Corporation), and set in a 10 mmϕ specimen case attached to the device, which was used as a measurement specimen.

### <Device conditions>

· Device: ZSX Primus IV
· X-ray bulb target: Rh
· Measuring diameter: 10 mm
· Spin: No
· Atmosphere: Vacuum
· Specimen form: Metal
· Balance component: C₈H₈O
· Specimen film: P.P. Film
· Sample weight and thickness: To be set

### <Qualitative element conditions>

- S-Kα
- Bulb: Rh (30 kV-100 mA)
- Primary filter: OUT
- Attenuator: 1/1
- Slit: S4
- Spectroscopic crystal: GeH
- 2θ: 110.830 deg (measurement range: 107 deg to 114 deg)
- Detector: PC
- PHA: 150
- Step: 0.05 deg
- Time: 0.15 sec

### «Measurement of vinyl group residual rate»

The vinyl group residual rate in particles was measured in accordance with JIS K 0070-1992.
1.8 g of the particles produced in each of the examples and comparative examples, 100 g of cyclohexane, and 25 g of Wijs reagent (0.1 mol/L iodine chloride/acetic acid solution) were added to a 200 mL Erlenmeyer flask and mixed together through shaking thoroughly. Thereafter, the particles were allowed to stand for 45 minutes to allow the reaction between iodine chloride and the ethylenically unsaturated groups in the particles to proceed. Next, 20 g of a 10 weight% potassium iodide solution, 100 g of water, and 0.5 g of a 1 weight% starch aqueous solution were added to the mixed solution and mixed through shaking thoroughly to prepare a blue-colored mixed solution. The blue-colored mixed solution was titrated with a 0.1 mol/L sodium thiosulfate solution until the blue color disappeared. The amount of residual iodine chloride in the mixed solution (mol) was calculated from the titration amount. Next, the amount (A) of residual vinyl groups (mol) in the particles was calculated from the amount of residual iodine chloride (mol). In addition, the amount of vinyl groups when all the polymers constituting 1.8 parts by weight of the particles produced in each of the examples and comparative examples were regarded as monomers was taken as a theoretical total amount (B) of vinyl groups (mol) in the particles.

The vinyl group residual rate (%) was calculated based on the following equation. Vinyl group residual rate (%)=[amount (A) of residual vinyl groups/theoretical total amount (B) of vinyl groups]×100

### «Productivity»

The total amount of slurry obtained after the completion of polymerization was passed through JIS test sieves (openings: 150 um and 75 µm) (JIS standard number: Z 8801-1:2019) while manually shaking the sieves. Particles remaining on the sieves (particles that did not pass through the sieves) were dried and weighed. The relative ratio of the residual particles to total amount of polymers was calculated and used as a standard of productivity.

### [Example 1]

100 g of a reactive low molecular weight polyphenylene ether (trade name "Noryl (registered trademark) SA9000-111 Resin" manufactured by SABIC) as a compound having an ether structure, 100 g of divinylbenzene (DVB) 810 (manufactured by NIPPON STEEL Chemical & Material Co., Ltd., product with its content of 81%, 19% being ethylvinylbenzene (EVB)), 200 g of heptane, 2.34 g of 2,2'-azobis(2,4-dimethylvaleronitrile) (trade name "V-65" manufactured by FUJIFILM Wako Pure Chemical Corporation) as a polymerization initiator, and 1.20 g of "KAYAMER (registered trademark) PM-21" (manufactured by Nippon Kayaku Co., Ltd.) as a radical polymerizable monomer having a phosphate group were mixed together to prepare an oil phase.

The oil phase was added to 1,281 g of a 2 weight% water dispersion of magnesium pyrophosphate as an aqueous phase and dispersed at 7,000 rpm for 5 minutes using a Polytron homogenizer "PT10-35" (manufactured by Central Scientific Commerce, Inc.) to prepare a suspension. After heating the resulting suspension at 55°C for 5 hours, the internal temperature of a polymerizer was increased to 80°C (secondary temperature increase), and the polymerization reaction was completed by stirring the above-described suspension at 80°C for 2 hours. After hydrochloric acid was added to the resulting slurry to decompose magnesium pyrophosphate, solids were separated by dehydration through filtration, purified through repeated washing with water, and then dried at 80°C for 24 hours to obtain particles (1).

A cross-sectional photographic view of the resulting particles (1) is shown in Fig. 1.

It was possible to confirm that the resulting particles (1) were a mixture of hollow resin particles (1a) in each of which a hollow surrounded by a shell consists of one hollow region and hollow resin particles (1b) in each of which a hollow surrounded by a shell has a porous structure.

The resulting particles (1) had a volume average particle diameter of 11.3 um and a coefficient of variation of 33.3%.

The resulting particles (1) had a 5% weight reduction temperature of 389°C when the temperature was raised at 10°C/min in a nitrogen atmosphere.

Table 1 shows the formulation amounts, various measurement results, and the like.

### [Example 2]

Particles (2) were obtained in the same manner as in Example 1 except that the amount of "KAYAMER (registered trademark) PM-21" (manufactured by Nippon Kayaku Co., Ltd.) used as a radical polymerizable monomer having a phosphate group was changed to 2.00 g.

A cross-sectional photographic view of the resulting particles (2) is shown in Fig. 2.
It was possible to confirm that the resulting particles (2) were hollow resin particles in each of which a hollow surrounded by a shell consists of a plurality of hollow regions (porous structure).

The resulting particles (2) had a volume average particle diameter of 12.7 um and a coefficient of variation of 35.2%.

The resulting particles (2) had a 5% weight reduction temperature of 385°C when the temperature was raised at 10°C/min in a nitrogen atmosphere.

Table 1 shows the formulation amounts, various measurement results, and the like.

### [Example 3]

Particles (3) were obtained in the same manner as in Example 1 except that the amount of reactive low molecular weight polyphenylene ether (trade name "Noryl (registered trademark) SA9000-111 Resin" manufactured by SABIC) used as a compound having an ether structure was changed to 80 g and the amount of divinylbenzene (DVB) 810 (manufactured by NIPPON STEEL Chemical & Material Co., Ltd., product with its content of 81%, 19% being ethylvinylbenzene (EVB)) used was changed to 120 g.

A cross-sectional photographic view of the resulting particles (3) is shown in Fig. 3.

It was possible to confirm that the resulting particles (3) were hollow resin particles in each of which a hollow surrounded by a shell consists of a plurality of hollow regions (porous structure).

The resulting particles (3) had a volume average particle diameter of 11.3 um and a coefficient of variation of 34.9%.

The resulting particles (3) had a 5% weight reduction temperature of 414°C when the temperature was raised at 10°C/min in a nitrogen atmosphere.

Table 1 shows the formulation amounts, various measurement results, and the like.

### [Example 4]

Particles (4) were obtained in the same manner as in Example 3 except that 80 g of a bifunctional polyphenylene ether oligomer (trade name "OPE-2St 1200" manufactured by Mitsubishi Gas Chemical Company, Inc.) as a compound having an ether structure was used instead of 80 g of the reactive low molecular weight polyphenylene ether (trade name "Noryl (registered trademark) SA9000-111 Resin" manufactured by SABIC) as a compound having an ether structure.

A cross-sectional photographic view of the resulting particles (4) is shown in Fig. 4.

It was possible to confirm that the resulting particles (4) were hollow resin particles in each of which a hollow surrounded by a shell consists of a plurality of hollow regions (porous structure).

The resulting particles (4) had a volume average particle diameter of 9.8 um and a coefficient of variation of 42.9%.

The resulting particles (4) had a 5% weight reduction temperature of 362°C when the temperature was raised at 10°C/min in a nitrogen atmosphere.

Table 1 shows the formulation amounts, various measurement results, and the like.

### [Example 5]

Particles (5) were obtained in the same manner as in Example 3 except that an oil phase was added to 1,381 g of a 2.5 weight% water dispersion of magnesium pyrophosphate as an aqueous phase and dispersed at 7,000 rpm for 5 minutes using a Polytron homogenizer "PT10-35" (manufactured by Central Scientific Commerce, Inc.) and then emulsified under a processing pressure of 20 MPa using a high-pressure emulsifier NVL-AS200 (manufactured by Yoshida Kikai Co., Ltd.) to prepare a suspension instead of adding an oil phase to 1,281 g of 2 weight% water dispersion of magnesium pyrophosphate as an aqueous phase and dispersing the oil phase at 7,000 rpm for 5 minutes using a Polytron homogenizer "PT10-35" (manufactured by Central Scientific Commerce, Inc.) to prepare a suspension.

A cross-sectional photographic view of the resulting particles (5) is shown in Fig. 5.
It was possible to confirm that the resulting particles (5) were hollow resin particles in each of which a hollow surrounded by a shell consists of a plurality of hollow regions (porous structure).

The resulting particles (5) had a volume average particle diameter of 4.2 um and a coefficient of variation of 35.3%.

The resulting particles (5) had a 5% weight reduction temperature of 399°C when the temperature was raised at 10°C/min in a nitrogen atmosphere.

Table 1 shows the formulation amounts, various measurement results, and the like.

### [Example 6]

Particles (6) were obtained in the same manner as in Example 5 except that an oil phase was added to a mixed solution of 1,381 g of 2.5 weight% water dispersion of magnesium pyrophosphate and 0.51 g of betaine lauryl dimethylaminoacetate (with a pure content of 35%) as an aqueous phase instead of adding an oil phase to 1,381 g of 2.5 weight% water dispersion of magnesium pyrophosphate as an aqueous phase.

A cross-sectional photographic view of the resulting particles (6) is shown in Fig. 6.

It was possible to confirm that the resulting particles (6) were hollow resin particles in each of which a hollow surrounded by a shell consists of a plurality of hollow regions (porous structure).

The resulting particles (6) had a volume average particle diameter of 4.5 um and a coefficient of variation of 31.1%.

The resulting particles (6) had a 5% weight reduction temperature of 392°C when the temperature was raised at 10°C/min in a nitrogen atmosphere.

Table 1 shows the formulation amounts, various measurement results, and the like.

### [Example 7]

Particles (7) were obtained in the same manner as in Example 6 except that the amount of reactive low molecular weight polyphenylene ether (trade name "Noryl (registered trademark) SA9000-111 Resin" manufactured by SABIC) used as a compound having an ether structure was changed to 60 g and the amount of divinylbenzene (DVB) 810 (manufactured by NIPPON STEEL Chemical & Material Co., Ltd., product with its content of 81%, 19% being ethylvinylbenzene (EVB)) used was changed to 140 g.

A cross-sectional photographic view of the resulting particles (7) is shown in Fig. 7.

It was possible to confirm that the resulting particles (7) were hollow resin particles in each of which a hollow surrounded by a shell consists of a plurality of hollow regions (porous structure).

The resulting particles (7) had a volume average particle diameter of 3.8 um and a coefficient of variation of 29.4%.

The resulting particles (7) had a 5% weight reduction temperature of 394°C when the temperature was raised at 10°C/min in a nitrogen atmosphere.

Table 1 shows the formulation amounts, various measurement results, and the like.

### [Comparative Example 1]

80 g of methyl methacrylate, 80 g of ethylene glycol dimethacrylate, 120 g of cyclohexane, 40 g of ethyl acetate, 1.60 g of 2,2'-azobis(2,4-dimethylvaleronitrile) (trade name "V-65" manufactured by FUJIFILM Wako Pure Chemical Corporation) as a polymerization initiator, 0.32 g of "KAYAMER (registered trademark) PM-21" (manufactured by Nippon Kayaku Co., Ltd.) as a radical polymerizable monomer having a phosphate group, and 140 g of lauryl phosphoric acid were mixed together to prepare an oil phase.

The oil phase was added to 1,281 g of a 2 weight% water dispersion of magnesium pyrophosphate as an aqueous phase and dispersed at 7,000 rpm for 5 minutes using a Polytron homogenizer "PT10-35" (manufactured by Central Scientific Commerce, Inc.) to prepare a suspension. After heating the resulting suspension at 55°C for 5 hours, the internal temperature of a polymerizer was increased to 80°C (secondary temperature increase), and the polymerization reaction was completed by stirring the above-described suspension at 80°C for 2 hours. After hydrochloric acid was added to the resulting slurry to decompose magnesium pyrophosphate, solids were separated by dehydration through filtration, purified through repeated washing with water, and then dried at 80°C for 24 hours to obtain particles (C1).

A cross-sectional photographic view of the resulting particles (C1) is shown in Fig. 8.

It was possible to confirm that the resulting particles (C1) were a mixture of hollow resin particles (C1a) in each of which a hollow surrounded by a shell consists of one hollow region and hollow resin particles (C1b) in each of which a hollow surrounded by a shell has a porous structure.

The resulting particles (C1) had a volume average particle diameter of 7.4 um and a coefficient of variation of 26.6%.

The resulting particles (C1) had a 5% weight reduction temperature of 239°C when the temperature was raised at 10°C/min in a nitrogen atmosphere.

### [Comparative Example 2]

The same process as in Example 1 was performed except that the amount of "KAYAMER (registered trademark) PM-21" (manufactured by Nippon Kayaku Co., Ltd.) used as a radical polymerizable monomer having a phosphate group was changed to 4.00 g.

As a result, the particles were crushed and hollow resin particles could not be obtained.

Table 1 shows the formulation amounts, various measurement results, and the like.

### [Comparative Example 3]

Particles (C3) were obtained in the same manner as in Example 1 except that 1.20 g of lauryl phosphoric acid was used instead of 1.20 g of "KAYAMER (registered trademark) PM-21" (manufactured by Nippon Kayaku Co., Ltd.) as a radical polymerizable monomer having a phosphate group.

A cross-sectional photographic view of the resulting particles (C3) is shown in Fig. 9.

It was possible to confirm that the resulting particles (C3) were hollow resin particles in each of which a hollow surrounded by a shell consists of a plurality of hollow regions (porous structure).

The resulting particles (C3) had a volume average particle diameter of 12.3 um and a coefficient of variation of 34.5%.

The resulting particles (C3) had a 5% weight reduction temperature of 392°C when the temperature was raised at 10°C/min in a nitrogen atmosphere.

Table 1 shows the formulation amounts, various measurement results, and the like.

### [Example 8]

56 g of a reactive low molecular weight polyphenylene ether (trade name "Noryl (registered trademark) SA9000-111 Resin" manufactured by SABIC) as a compound having an ether structure, 84 g of divinylbenzene (DVB) 810 (manufactured by NIPPON STEEL Chemical & Material Co., Ltd., product with its content of 81%, 19% being ethylvinylbenzene (EVB)), 140 g of heptane, 2.34 g of 2,2'-azobis(2,4-dimethylvaleronitrile) (trade name "V-65" manufactured by FUJIFILM Wako Pure Chemical Corporation) as a polymerization initiator, and 0.84 g of "KAYAMER (registered trademark) PM-21" (manufactured by Nippon Kayaku Co., Ltd.) as a radical polymerizable monomer having a phosphate group were mixed together to prepare an oil phase.

The oil phase was added to 1,214 g of 2.5 weight% water dispersion of magnesium pyrophosphate as an aqueous phase and dispersed at 7,000 rpm for 2 minutes using a Polytron homogenizer "PT10-35" (manufactured by Central Scientific Commerce, Inc.) and then emulsified under a processing pressure of 20 MPa using a high-pressure emulsifier NVL-AS200 (manufactured by Yoshida Kikai Co., Ltd.) to prepare a suspension. After heating the resulting suspension at 55°C for 5 hours, 0.7 g of 1-octanethiol (manufactured by Tokyo Chemical Industry Co., Ltd.) as a thiol was added to a polymerizer, the internal temperature of the polymerizer was increased to 80°C (secondary temperature increase), and the polymerization reaction was completed by stirring the above-described suspension at 80°C for 2 hours.

After hydrochloric acid was added to the resulting slurry to decompose magnesium pyrophosphate, solids were separated by dehydration through filtration, purified through repeated washing with water, and then dried at 80°C for 24 hours to obtain particles (8).

A cross-sectional photographic view of the resulting particles (8) is shown in Fig. 10.

It was possible to confirm that the resulting particles (8) are hollow resin particles in each of which a hollow surrounded by a shell has a porous structure.

The resulting particles (8) had a volume average particle diameter of 3.8 um and a coefficient of variation of 28.4%.

The resulting particles (8) had a 5% weight reduction temperature of 403.3°C when the temperature was raised at 10°C/min in a nitrogen atmosphere.

Table 2 shows the formulation amounts, various measurement results, and the like.

### [Example 9]

Particles (9) were obtained in the same manner as in Example 8 except that the amount of 1-octanethiol used as a thiol was 7.0 g.

A cross-sectional photographic view of the resulting particles (9) is shown in Fig. 11.

It was possible to confirm that the resulting particles (9) are hollow resin particles in each of which a hollow surrounded by a shell has a porous structure.

The resulting particles (9) had a volume average particle diameter of 3.4 um and a coefficient of variation of 22.7%.

The resulting particles (9) had a 5% weight reduction temperature of 390.9°C when the temperature was raised at 10°C/min in a nitrogen atmosphere.

Table 2 shows the formulation amounts, various measurement results, and the like.

### [Example 10]

Particles (10) were obtained in the same manner as in Example 9 except that an oil phase was added to a mixed solution of 1,214 g of 2.5 weight% water dispersion of magnesium pyrophosphate and 0.51 g of betaine lauryl dimethylaminoacetate (with a pure content of 35%) as an aqueous phase instead of adding an oil phase to 1,214 g of 2.5 weight% water dispersion of magnesium pyrophosphate as an aqueous phase.

A cross-sectional photographic view of the resulting particles (10) is shown in Fig. 12.

It was possible to confirm that the resulting particles (10) are hollow resin particles in each of which a hollow surrounded by a shell has a porous structure.

The resulting particles (10) had a volume average particle diameter of 3.8 um and a coefficient of variation of 28.1%.

The resulting particles (10) had a 5% weight reduction temperature of 388.5°C when the temperature was raised at 10°C/min in a nitrogen atmosphere.

The obtained particles (10) had an elemental phosphorus content of 230 µg/g and an elemental magnesium content of 89 µg/g.

Table 2 shows the formulation amounts, various measurement results, and the like.

### [Example 11]

Particles (11) were obtained in the same manner as in Example 8 except that the amount of 1-octanethiol used as a thiol was 14.0 g.

A cross-sectional photographic view of the resulting particles (11) is shown in Fig. 13.

It was possible to confirm that the resulting particles (11) are hollow resin particles in each of which a hollow surrounded by a shell has a porous structure.

The resulting particles (11) had a volume average particle diameter of 3.6 um and a coefficient of variation of 24.8%.

The resulting particles (11) had a 5% weight reduction temperature of 299.4°C when the temperature was raised at 10°C/min in a nitrogen atmosphere.

Table 2 shows the formulation amounts, various measurement results, and the like.

### [Example 12]

Particles (12) were obtained in the same manner as in Example 8 except that 7.0 g of 1-hexanethiol (manufactured by Tokyo Chemical Industry Co., Ltd.) was used as a thiol.

A cross-sectional photographic view of the resulting particles (12) is shown in Fig. 14.

It was possible to confirm that the resulting particles (12) are hollow resin particles in each of which a hollow surrounded by a shell has a porous structure.

The resulting particles (12) had a volume average particle diameter of 3.5 um and a coefficient of variation of 24.9%.

The resulting particles (12) had a 5% weight reduction temperature of 382.7°C when the temperature was raised at 10°C/min in a nitrogen atmosphere.

Table 2 shows the formulation amounts, various measurement results, and the like.

### [Example 13]

Particles (13) were obtained in the same manner as in Example 8 except that 7.0 g of 1-dodecanethiol (manufactured by Wako Pure Chemical Industries, Ltd.) as a thiol was used.

A cross-sectional photographic view of the resulting particles (13) is shown in Fig. 15.

It was possible to confirm that the resulting particles (13) are hollow resin particles in each of which a hollow surrounded by a shell has a porous structure.

The resulting particles (13) had a volume average particle diameter of 3.3 um and a coefficient of variation of 24.5%.

The resulting particles (13) had a 5% weight reduction temperature of 375.9°C when the temperature was raised at 10°C/min in a nitrogen atmosphere.

Table 2 shows the formulation amounts, various measurement results, and the like.

### [Example 14]

Particles (14) were obtained in the same manner as in Example 8 except that, after a suspension obtained after dispersion at 7,000 rpm for 2 minutes using a Polytron homogenizer "PT10-35" (manufactured by Central Scientific Commerce, Inc.) was heated at 55°C for 5 hours, 7.0 g of 1-octanethiol as a thiol was added to a polymerizer, the internal temperature of the polymerizer was increased to 80°C (secondary temperature increase), and the polymerization reaction was completed by stirring the above-described suspension at 80°C for 2 hours.

A cross-sectional photographic view of the resulting particles (14) is shown in Fig. 16.

It was possible to confirm that the resulting particles (14) are hollow resin particles in each of which a hollow surrounded by a shell has a porous structure.

The resulting particles (14) had a volume average particle diameter of 10.3 um and a coefficient of variation of 38.9%.

The resulting particles (14) had a 5% weight reduction temperature of 361.8°C when the temperature was raised at 10°C/min in a nitrogen atmosphere.

Table 2 shows the formulation amounts, various measurement results, and the like.

### [Example 15]

Particles (15) were obtained in the same manner as in Example 8 except that 56 g of a bifunctional polyphenylene ether oligomer (trade name "OPE-2St 1200" manufactured by Mitsubishi Gas Chemical Company, Inc.) was used as a compound having an ether structure and the amount of 1-octanethiol used as a thiol was changed to 7.0 g.

A cross-sectional photographic view of the resulting particles (15) is shown in Fig. 17.

It was possible to confirm that the resulting particles (15) are hollow resin particles in each of which a hollow surrounded by a shell has a porous structure.

The resulting particles (15) had a volume average particle diameter of 3.7 um and a coefficient of variation of 25.8%.

The resulting particles (15) had a 5% weight reduction temperature of 339.0°C when the temperature was raised at 10°C/min in a nitrogen atmosphere.

Table 2 shows the formulation amounts, various measurement results, and the like.

### [Example 16]

Particles (16) were obtained in the same manner as in Example 8 except that 42 g of a reactive low molecular weight polyphenylene ether (trade name "Noryl (registered trademark) SA9000-111 Resin" manufactured by SABIC) as a compound having an ether structure, 98 g of divinylbenzene (DVB) 810 (manufactured by NIPPON STEEL Chemical & Material Co., Ltd., product with its content of 81%, 19% being ethylvinylbenzene (EVB)), and 7 g of 1-octanethiol as a thiol were added to a polymerizer, the internal temperature of the polymerizer was increased to 80°C (secondary temperature increase), and the polymerization reaction was completed by stirring the above-described suspension at 80°C for 2 hours.

A cross-sectional photographic view of the resulting particles (16) is shown in Fig. 18.

It was possible to confirm that the resulting particles (16) are hollow resin particles in each of which a hollow surrounded by a shell has a porous structure.

The resulting particles (16) had a volume average particle diameter of 4.6 um and a coefficient of variation of 41.2%.

The resulting particles (16) had a 5% weight reduction temperature of 392.3°C when the temperature was raised at 10°C/min in a nitrogen atmosphere.

Table 2 shows the formulation amounts, various measurement results, and the like.

### [Example 17]

Particles (17) were obtained in the same manner as in Example 8 except that 84 g of a reactive low molecular weight polyphenylene ether (trade name "Noryl (registered trademark) SA9000-111 Resin" manufactured by SABIC) as a compound having an ether structure, 56 g of divinylbenzene (DVB) 810 (manufactured by NIPPON STEEL Chemical & Material Co., Ltd., product with its content of 81%, 19% being ethylvinylbenzene (EVB)), and 7 g of 1-octanethiol as a thiol were added to a polymerizer, the internal temperature of the polymerizer was increased to 80°C (secondary temperature increase), and the polymerization reaction was completed by stirring the above-described suspension at 80°C for 2 hours.

A cross-sectional photographic view of the resulting particles (17) is shown in Fig. 19.

It was possible to confirm that the resulting particles (17) are hollow resin particles in each of which a hollow surrounded by a shell has a single structure.

The obtained particles (17) had a volume average particle diameter of 6.4 um and a coefficient of variation of 26.5%.

The resulting particles (17) had a 5% thermal weight reduction temperature of 354.4°C when the temperature was raised at 10°C/min in a nitrogen atmosphere.

Table 2 shows the formulation amounts, various measurement results, and the like.

### [Comparative Example 4]

70 g of methyl methacrylate, 70 g of ethylene glycol dimethacrylate, 35 g of ethyl acetate, 105 g of cyclohexane, 1.4 g of 2,2'-azobis(2,4-dimethylvaleronitrile) (trade name "V-65" manufactured by FUJIFILM Wako Pure Chemical Corporation) as a polymerization initiator, and 0.28 g of "KAYAMER (registered trademark) PM-21" (manufactured by Nippon Kayaku Co., Ltd.) were mixed together to prepare an oil phase.

The oil phase was added to 1,214 g of a 2.5 weight% water dispersion of magnesium pyrophosphate as an aqueous phase and dispersed at 7,000 rpm for 2 minutes using a Polytron homogenizer "PT10-35" (manufactured by Central Scientific Commerce, Inc.) to prepare a suspension. After heating the resulting suspension at 55°C for 5 hours, the internal temperature of a polymerizer was increased to 80°C (secondary temperature increase), and the polymerization reaction was completed by stirring the above-described suspension at 80°C for 2 hours.

After hydrochloric acid was added to the resulting slurry to decompose magnesium pyrophosphate, solids were separated by dehydration through filtration, purified through repeated washing with water, and then dried at 80°C for 24 hours to obtain particles (C4).

A cross-sectional photographic view of the resulting particles (C4) is shown in Fig. 20.

It was possible to confirm that the resulting particles (C4) are hollow resin particles in each of which a hollow surrounded by a shell has a porous structure.

The resulting particles (C4) had a volume average particle diameter of 7.4 um and a coefficient of variation of 26.6%.

The resulting particles (C4) had a 5% thermal weight reduction temperature of 239.2°C when the temperature was raised at 10°C/min in a nitrogen atmosphere.

Table 2 shows the formulation amounts, various measurement results, and the like.

### [Comparative Example 5]

56 g of a bifunctional polyphenylene ether oligomer (trade name "OPE-2St 1200" manufactured by Mitsubishi Gas Chemical Company, Inc.) as a compound having an ether structure, 84 g of divinylbenzene (DVB) 810 (manufactured by NIPPON STEEL Chemical & Material Co., Ltd., product with its content of 81%, 19% being ethylvinylbenzene (EVB)), 140 g of heptane, 2.34 g of 2,2'-azobis(2,4-dimethylvaleronitrile) (trade name "V-65" manufactured by FUJIFILM Wako Pure Chemical Corporation) as a polymerization initiator, and 0.84 g of "KAYAMER (registered trademark) PM-21" (manufactured by Nippon Kayaku Co., Ltd.) as a radical polymerizable monomer having a phosphate group were mixed together to prepare an oil phase.

The oil phase was added to 1,214 g of 2.5 weight% water dispersion of magnesium pyrophosphate as an aqueous phase and dispersed at 7,000 rpm for 2 minutes using a Polytron homogenizer "PT10-35" (manufactured by Central Scientific Commerce, Inc.) and then emulsified under a processing pressure of 20 MPa using a high-pressure emulsifier NVL-AS200 (manufactured by Yoshida Kikai Co., Ltd.) to prepare a suspension. After heating the resulting suspension at 55°C for 5 hours, the internal temperature of a polymerizer was increased to 80°C (secondary temperature increase), and the polymerization reaction was completed by stirring the above-described suspension at 80°C for 2 hours.

After hydrochloric acid was added to the resulting slurry to decompose magnesium pyrophosphate, solids were separated by dehydration through filtration, purified through repeated washing with water, and then dried at 80°C for 24 hours to obtain particles (C5).

A cross-sectional photographic view of a resulting particle (C5) is shown in Fig. 21.

It was possible to confirm that the resulting particles (C5) are hollow resin particles in each of which a hollow surrounded by a shell has a porous structure.

The resulting particles (C5) had a volume average particle diameter of 9.8 um and a coefficient of variation of 42.9%.

The resulting particles (C5) had a 5% thermal weight reduction temperature of 371.6°C when the temperature was raised at 10°C/min in a nitrogen atmosphere.

Table 2 shows the formulation amounts, various measurement results, and the like.

**[Table 1-1]**

| | | | | Example 1 | Example 2 | Example 3 | Example 4 | Example 5 |
|---|---|---|---|---|---|---|---|---|
| Oil phase | Compound (A) having ether structure and radical-reactive group | | SA9000 (g) | 100 | 100 | 80 | - | 80 |
| | | | OPE-2St (g) | - | - | - | 80 | - |
| | Monomer (M) | Compound (B) having phosphate structure and radical-reactive group | KAYAMER PM-21 (g) | 1.20 | 2.00 | 1.20 | 1.20 | 1.20 |
| | | Monomer (M) other than compound (B) | MMA (g) | - | - | - | - | - |
| | | | DVB-810 (g) | 100 | 100 | 120 | 120 | 120 |
| | | | Ethylene glycol dimethacrylate (g) | - | - | - | - | - |
| | Additive (C) | | Lauryl phosphoric acid (g) | - | - | - | - | - |
| | | | V-65 (g) | 2.34 | 2.34 | 2.34 | 2.34 | 2.34 |
| | | | Betaine lauryl dimethylaminoacetate (g) | - | - | - | - | - |
| | Non-reactive solvent | | Heptane (g) | 200 | 200 | 200 | 200 | 200 |
| | | | Ethyl acetate (g) | - | - | - | - | - |
| | | | Cyclohexane (g) | - | - | - | - | - |
| Aqueous phase | Water dispersion of dispersion stabilizer (D) | | 2.0 wt% water dispersion of magnesium pyrophosphate (g) | 1281 | 1281 | 1281 | 1281 | - |
| | | | 2.5 wt% water dispersion of magnesium pyrophosphate (g) | - | - | - | - | 1381 |
| Physical properties and evaluation | | Volume average particle diameter (µm) | | 11.3 | 12.7 | 11.3 | 9.8 | 4.2 |
| | | Coefficient of variation (%) | | 33.3 | 35.2 | 34.9 | 42.9 | 35.3 |
| | | 5% weight reduction temperature in nitrogen atmosphere (°C) | | 389 | 385 | 414 | 362 | 399 |
| | | Phosphorus element content (pg/g) | | 230 | 170 | 150 | 170 | 270 |
| | | Magnesium element content (pg/g) | | 81 | 22 | 22 | 79 | 48 |
| | | Productivity | Proportion of particles with diameter exceeding 150 µm | Not confirmed | Not confirmed | Not confirmed | Not confirmed | Not confirmed |
| | | | Proportion of particles with diameter exceeding 75 µm | - | - | - | - | 5.1% |

**[Table 1-2]**

| | | | | Example 6 | Example 7 | Com. Ex. 1 | Com. Ex. 2 | Com. Ex. 3 |
|---|---|---|---|---|---|---|---|---|
| Oil phase | Compound (A) having ether structure and radical-reactive group | | SA9000 (g) | 80 | 60 | - | 100 | 100 |
| | | | OPE-2St (g) | - | - | - | | |
| | Monomer (M) | Compound (B) having phosphate structure and radical-reactive group | KAYAMER PM-21 (g) | 1.20 | 1.20 | 0.32 | 4.00 | - |
| | | Monomer (M) other than compound (B) | MMA (g) | - | - | 80 | - | - |
| | | | DVB-810 (g) | 120 | 140 | - | 100 | 100 |
| | | | Ethylene glycol dimethacrylate (g) | - | - | 80 | - | - |
| | Additive (C) | | Lauryl phosphoric acid (g) | - | - | - | - | 1.20 |
| | | | V-65 (g) | 2.34 | 2.34 | 1.60 | 2.34 | 2.34 |
| | | | Betaine lauryl dimethylaminoacetate (g) | 0.51 | 0.51 | - | - | - |
| | Non-reactive solvent | | Heptane (g) | 200 | 200 | - | 200 | 200 |
| | | | Ethyl acetate (g) | - | - | 40 | - | - |
| | | | Cyclohexane (g) | - | - | 120 | - | - |
| Aqueous phase | Water dispersion of dispersion stabilizer (D) | | 2.0 wt% water dispersion of magnesium pyrophosphate (g) | - | - | 1281 | 1281 | 1281 |
| | | | 2.5 wt% water dispersion of magnesium pyrophosphate (g) | 1381 | 1381 | - | - | - |
| Physical properties and evaluation | | Volume average particle diameter (µm) | | 4.5 | 3.8 | 7.4 | Particles could not be obtained | 12.3 |
| | | Coefficient of variation (%) | | 31.1 | 29.4 | 26.6 | | 34.5 |
| | | 5% weight reduction temperature in nitrogen atmosphere (°C) | | 392 | 394 | 239 | | 392 |
| | | Phosphorus element content (pg/g) | | 250 | 220 | 80 | | 430 |
| | | Magnesium element content (µg/g) | | 52 | 85 | 33 | | 57 |
| | | Productivity | Proportion of particles with diameter exceeding 150 µm | Not confirmed | Not confirmed | Not confirmed | | 10.2 % |
| | | | Proportion of particles with diameter exceeding 75 µm | Not confirmed | Not confirmed | - | | - |

**[Table 2-1]**

| | | | | Example 8 | Example 9 | Example 10 | Example 11 | Example 12 | Example 13 |
|---|---|---|---|---|---|---|---|---|---|
| Oil phase | Compound (A) having ether structure and radical-reactive group (parts by weight) | | SA9000 (g) | 56 | 56 | 56 | 56 | 56 | 56 |
| | | | OPE-2St (g) | - | - | - | - | - | - |
| | Monomer (M) (parts by weight) | Compound (B) having phosphate structure and radical-reactive group | KAYAMER PM-21 (g) | 0.84 | 0.84 | 0.84 | 0.84 | 0.84 | 0.84 |
| | | Monomer (M) other than compound (B) | MMA (g) | - | - | - | - | - | - |
| | | | DVB-810 (g) | 84 | 84 | 84 | 84 | 84 | 84 |
| | | | Ethylene glycol dimethacrylate (g) | - | - | - | - | - | - |
| | Additive (C) (parts by weight) | | V-65 (g) | 2.34 | 2.34 | 2.34 | 2.34 | 2.34 | 2.34 |
| | | | Betaine lauryl dimethylaminoacetate (g) | - | - | 0.51 | - | - | - |
| | Non-reactive solvent (parts by weight) | | Heptane (g) | 140 | 140 | 140 | 140 | 140 | 140 |
| | | | Ethyl acetate (g) | - | - | - | - | - | - |
| | | | Cyclohexane (g) | - | - | - | - | - | - |
| Aqueous phase | Water dispersion of dispersion stabilizer (D) (parts by weight) | | 2.5 wt% water dispersion of magnesium pyrophosphate (g) | 1214 | 1214 | 1214 | 1214 | 1214 | 1214 |
| Thiol (parts by weight) | | | 1-octanethiol (g) | 0.7 | 7.0 | 7.0 | 14.0 | - | - |
| | | | 1-hexanethiol (g) | - | - | - | - | 7.0 | - |
| | | | 1-dodecanethiol (g) | - | - | - | - | - | 7.0 |
| Physical properties and evaluation | | Volume average particle diameter (µm) | | 3.8 | 3.4 | 3.8 | 3.6 | 3.5 | 3.3 |
| | | Coefficient of variation (%) | | 28.4 | 22.7 | 28.1 | 24.8 | 24.9 | 24.5 |
| | | 5% weight reduction temperature in nitrogen atmosphere (°C) | | 403.3 | 390.9 | 388.5 | 299.4 | 382.7 | 375.9 |
| | | Exothermic onset temperature in nitrogen atmosphere (°C) | | 291.9 | 322.4 | 320.9 | 325.3 | 326.9 | 314.7 |
| | | Sulfur atom content (mass%) Detection limit is 0.002 mass% | | 0.13 | 1.20 | 1.11 | 2.52 | 1.70 | 0.88 |
| | | Vinyl group residual rate (%) | | 10.9 | 7.7 | 7.1 | 9.2 | 8.0 | 8.9 |
| | | Productivity | Proportion of particles with diameter exceeding 150 µm | Not confirmed | Not confirmed | Not confirmed | Not confirmed | Not confirmed | Not confirmed |
| | | | Proportion of particles with diameter exceeding 75 µm | - | 6.2% | Not confirmed | - | - | - |

**[Table 2-2]**

| | | | | Example 14 | Example 15 | Example 16 | Example 17 | Com. Ex. 4 | Com. Ex. 5 |
|---|---|---|---|---|---|---|---|---|---|
| Oil phase | Compound (A) having ether structure and radical-reactive group (parts by weight) | | SA9000 (g) | 56 | - | 42 | 84 | - | - |
| | | | OPE-2St (g) | - | 56 | - | - | - | 56 |
| | Monomer (M) (parts by weight) | Compound (B) having phosphate structure and radical-reactive group | KAYAMER PM-21 (g) | 0.84 | 0.84 | 0.84 | 0.84 | 0.28 | 0.84 |
| | | Monomer (M) other than compound (B) | MMA (g) | - | - | - | - | 70 | - |
| | | | DVB-810 (g) | 84 | 84 | 98 | 56 | - | 84 |
| | | | Ethylene glycol dimethacrylate (g) | - | - | - | - | 70 | - |
| | Additive (C) (parts by weight) | | V-65 (g) | 2.34 | 2.34 | 2.34 | 2.34 | 1.40 | 2.34 |
| | | | Betaine lauryl dimethylaminoacetate (g) | - | - | - | - | - | - |
| | Non-reactive solvent (parts by weight) | | Heptane (g) | 140 | 140 | 140 | 140 | | 140 |
| | | | Ethyl acetate (g) | - | - | - | - | 35 | - |
| | | | Cyclohexane (g) | - | - | - | - | 105 | - |
| Aqueous phase | Water dispersion of dispersion stabilizer (D) (parts bv weight) | | 2.5 wt% water dispersion of magnesium pyrophosphate (g) | 1214 | 1214 | 1214 | 1214 | 1214 | 1214 |
| Thiol (parts by weight) | | | 1-octanethiol (g) | 7.0 | 7.0 | 7.0 | 7.0 | - | - |
| | | | 1-hexanethiol (g) | - | - | - | - | - | - |
| | | | 1-dodecanethiol (g) | - | - | - | - | - | - |
| Physical properties and evaluation | | Volume average particle diameter (µm) | | 10.3 | 3.7 | 4.6 | 6.4 | 7.4 | 9.8 |
| | | Coefficient of variation (%) | | 38.9 | 25.8 | 41.2 | 26.5 | 26.6 | 42.9 |
| | | 5% weight reduction temperature in nitrogen atmosphere (°C) | | 361.8 | 339.0 | 392.3 | 354.4 | 239.2 | 371.6 |
| | | Exothermic onset temperature in nitrogen atmosphere (°C) | | 313.1 | 298.7 | 312.4 | 328.3 | 271.7 | 236.6 |
| | | Sulfur atom content (mass%) Detection limit is 0.002 mass% | | 1.21 | 1.17 | 1.11 | 1.76 | Below detection limit | Below detection limit |
| | | Vinyl group residual rate (%) | | 8.2 | 7.7 | 6.9 | 12 | 1.1 | 13.3 |
| | | Productivity | Proportion of particles with diameter exceeding 150 µm | Not confirmed | Not confirmed | Not confirmed | Not confirmed | Not confirmed | Not confirmed |
| | | | Proportion of particles with diameter exceeding 75 µm | - | - | - | - | - | - |

### [Example 18]

0.425 g of the hollow resin particles (particles (1)) obtained in Example 1, 8.3 g of ethyl acetate, and 1.7 g of solvent-soluble polyimide KPI-MX300F (manufactured by Kawamura Sangyo Co., Ltd.) were defoamed and stirred using a planetary stirring defoamer ("Mazerustar KK-250" manufactured by Kurabo Industries Ltd.) to produce a resin composition (1).

The resin composition (1) was applied to a glass plate having a thickness of 5 mm using an applicator set to a wet thickness of 250 pm, and then ethyl acetate was removed by heating at 60°C for 30 minutes, at 90°C for 10 minutes, at 150°C for 30 minutes, and at 200°C for 30 minutes, followed by cooling to room temperature to obtain a film (1).

### [Example 19]

A resin composition (5) and a film (5) were obtained in the same manner as in Example 18 except that 0.425 g of the hollow resin particles) (particles (5)) obtained in Example 5 was used instead of 0.425 g of the hollow resin particles (particles (1)) obtained in Example 1.

A cross-sectional sample of the film (5) was prepared through a cross-sectional polisher method using a cross-section preparation device "IB-19500CP" (manufactured by JEOL Ltd.) and its cross section was observed using a scanning electron microscope "S-3400N" manufactured by Hitachi High-Technologies Corporation. The resulting cross-sectional photographic view is shown in Fig. 22.

In the cross-sectional photographic view, the white portions mean polyimides, and the spherical substances observed within the white portions mean hollow resin particles. In addition, the black areas inside the hollow resin particles indicate air layers.

If the interior of the hollow resin particles is observed to be black as shown in Fig. 22, it means that voids in the hollow resin particles in the polyimide film are maintained, that is, the resin (polyimide) is not penetrating into the hollow resin particles.

### [Comparative Example 6]

A resin composition (C1) and a film (C1) were obtained in the same manner as in Example 18 except that 0.425 g of the hollow resin particles) (particles (C1)) obtained in Comparative Example 1 was used instead of 0.425 g of the hollow resin particles (particles (1)) obtained in Example 1.

### [Comparative Example 7]

A resin composition (C3) and a film (C3) were obtained in the same manner as in Example 18 except that 0.425 g of the hollow resin particles) (particles (C3)) obtained in Comparative Example 3 was used instead of 0.425 g of the hollow resin particles (particles (1)) obtained in Example 1.

A cross-sectional sample of the film (C3) was prepared through a cross-sectional polisher method using a cross-section preparation device "IB-19500CP" (manufactured by JEOL Ltd.) and its cross section was observed using a scanning electron microscope "S-3400N" manufactured by Hitachi High-Technologies Corporation. The resulting cross-sectional photographic view is shown in Fig. 23.

In the cross-sectional photographic view, the white portions mean polyimides, and the spherical substances observed within the white portions mean hollow resin particles. In addition, the black areas inside the hollow resin particles indicate air layers.

If a portion of the interior of the hollow resin particles is observed to be gray or white instead of black as shown in Fig. 23, it means that the resin (polyimide) has partially penetrated into the hollow resin particles, reducing the void area.

### «Performance evaluation: Evaluation of relative dielectric constant and dielectric loss tangent»

The relative dielectric constant and dielectric loss tangent of the films obtained in Examples 18 and 19 and Comparative Examples 6 and 7 were evaluated through a cavity resonance method (measurement frequency: 5.8 GHz). The measurement results were expressed as a relative percentage (%) with the measurement value for a film containing no particles taken as 100%. The results are shown in Table 3.

**[Table 3]**

| | Example 18 | Example 19 | Comparative Example 6 | Comparative Example 7 | Blank |
|---|---|---|---|---|---|
| | Film containing hollow resin particles (particles (1)) of Example 1 | Film containing hollow resin particles (particles (5)) of Example 5 | Film containing hollow resin particles (particles (C1)) of Comparative Example 1 | Film containing hollow resin particles (particles (C3)) of Comparative Example 3 | Film containing no particles (reference) |
| Relative dielectric constant (%) | 86 | 79 | 81 | 92 | 100 |
| Dielectric loss tangent (%) | 74 | 72 | 132 | 78 | 100 |

It can be confirmed from the results in Table 3 that the hollow resin particles provided by the present invention have the effect of lowering the relative dielectric constant and dielectric loss tangent of a base material and are effective for the purpose of lowering the relative dielectric constant and dielectric loss tangent of semiconductor materials.

### [Example 20]

0.425 g of the hollow resin particles (particles (9)) obtained in Example 9, 8.3 g of ethyl acetate, and 1.7 g of solvent-soluble polyimide KPI-MX300F (manufactured by Kawamura Sangyo Co., Ltd.) were defoamed and stirred using a planetary stirring defoamer ("Mazerustar KK-250" manufactured by Kurabo Industries Ltd.) to produce a resin composition (9).

The resin composition (9) was applied to a glass plate having a thickness of 5 mm using an applicator set to a wet thickness of 250 pm, and then ethyl acetate was removed by heating at 60°C for 30 minutes, at 90°C for 10 minutes, at 150°C for 30 minutes, and at 200°C for 30 minutes, followed by cooling to room temperature to obtain a film (9).

### [Comparative Example 8]

A resin composition (C4) and a film (C4) were obtained in the same manner as in Example 20 except that 0.425 g of the hollow resin particles) (particles (C4)) obtained in Comparative Example 4 was used instead of 0.425 g of the hollow resin particles (particles (9)) obtained in Example 9.

### «Performance evaluation: Evaluation of relative dielectric constant and dielectric loss tangent»

The relative dielectric constant and dielectric loss tangent of the films obtained in Example 20 and Comparative Example 8 were evaluated through a cavity resonance method (measurement frequency: 5.8 GHz). The measurement results were expressed as a relative percentage (%) with the measurement value for a film containing no particles taken as 100%. The results are shown in Table 4.

**[Table 4]**

| | Example 20 | Comparative Example 8 | Blank |
|---|---|---|---|
| | Film containing hollow resin particles (particles (9)) of Example 9 | Film containing hollow resin particles (particles (C4)) of Comparative Example 4 | Film containing no particles (reference) |
| Relative dielectric constant (%) | 68 | 87 | 100 |
| Dielectric loss tangent (%) | 62 | 131 | 100 |

It can be confirmed from the results in Table 4 that the hollow resin particles provided by the present invention have the effect of lowering the relative dielectric constant and dielectric loss tangent of a base material and are effective for the purpose of lowering the relative dielectric constant and dielectric loss tangent of semiconductor materials.

### [Example 21]

2.5 g of the hollow resin particles (particles (6)) obtained in Example 6 was added to 10 g of a commercially available water-based paint (trade name "Water-Based Multi-Use Color Clear" manufactured by Asahipen Corporation), and the mixture was defoamed and stirred using a planetary stirring defoamer (Mazerustar KK-250 manufactured by Kurabo Industries Ltd.) to obtain a paint composition (6-1).

### «Performance evaluation: Evaluation of reflection characteristics of ultraviolet-visible-near-infrared light»

The paint composition (6-1) obtained in Example 21 was applied to a black side of contrast ratio test paper with an applicator set to a wet thickness of 250 um, and then dried thoroughly at room temperature to obtain an evaluation sample plate. The reflectance of the sample plate to ultraviolet, visible, and near-infrared light was evaluated according to the following procedure.

An ultraviolet-visible near-infrared spectrophotometer (Solid Spec 3700) manufactured by Shimadzu Corporation was used as a reflectance measurement device to measure the reflection characteristics for ultraviolet light to near-infrared light (wavelength of 300 nm to 2500 nm) of the coated surface of the sample plate as reflectance (%). The measurement was performed using a 60 mmϕ integrating sphere and Spectralon as a standard white plate.

The obtained results are shown in Fig. 24. As shown in Fig. 24, it can be seen that the reflectance is 40% or higher at almost all wavelengths of ultraviolet light to near-infrared light.

In addition, it can be seen that the reflection effect of near-infrared rays indicates that a thermal insulation effect is imparted.

### [Example 22]

2 parts by weight of the hollow resin particles (particles (6)) obtained in Example 6 and 20 parts by weight of a commercially available acrylic water-based glossy paint (trade name "Super Hit" manufactured by Kanpe Hapio Co., Ltd.) were mixed together for 3 minutes and defoamed for 1 minute using a planetary stirring defoamer (Mazerustar KK-250 manufactured by Kurabo Industries Ltd.) to obtain a paint composition (6-2). The resulting paint composition (6-2) was applied onto an acrylonitrile-butadiene-styrene resin (ABS resin) plate using a coating device set with a 75 µm-clearance blade, and then dried to obtain a paint film (6-2).

### «Performance evaluation: Evaluation of matte properties»

The paint composition (6-2) obtained in Example 22 was sprayed onto a 3 mm thick acrylic plate to create a 50 um thick matte paint film. The obtained paint film showed no protrusions and had good matte properties.

### [Example 23]

7.5 parts by weight of the hollow resin particles (particles (6)) obtained in Example 6, 30 parts by weight of an acrylic resin (product name "Acrydic A811" manufactured by DIC Corporation), 10 parts by weight of a cross-linking agent (product name "VM-D" manufactured by DIC Corporation), and 50 parts by weight of butyl acetate as a solvent were mixed together for 3 minutes and deformed for 1 minute using a planetary stirring defoamer (Mazerustar KK-250 manufactured by Kurabo Industries Ltd.) to obtain a light diffusion resin composition (6).

The resulting light diffusion resin composition (6) was applied onto a 125 µm thick PET film using a coating device set with a 50 pm-clearance blade, and then dried at 70°C for 10 minutes to obtain a light diffusion film (6).

### «Performance evaluation: Evaluation of light diffusibility»

The total light transmittance and haze of the light diffusion film (6) obtained in Example 23 were measured using a haze meter (trade name "NDH 2000" manufactured by Nippon Denshoku industries Co., Ltd.) according to JIS K 7361-1: 1997 and JIS K 7136: 2000, respectively. The higher the diffusibility of light transmitted through the light diffusion film (transmitted light), the higher the haze value.

As a result of the measurements, the haze and the total light transmittance were 42.1% and 83.6%, respectively, and thus it was recognized that the light diffusion film (6) obtained in Example 23 had excellent light diffusibility.

### [Example 24]

2.5 g of the hollow resin particles (particles (9)) obtained in Example 9 was added to 10 g of a commercially available water-based paint (trade name "Water-Based Multi-Use Color Clear" manufactured by Asahipen Corporation), and the mixture was defoamed and stirred using a planetary stirring defoamer (Mazerustar KK-250 manufactured by Kurabo Industries Ltd.) to obtain a paint composition (9-1).

### «Performance evaluation: Evaluation of reflection characteristics of ultraviolet-visible-near-infrared light»

The paint composition (9-1) obtained in Example 24 was applied to a black side of contrast ratio test paper with an applicator set to a wet thickness of 250 um, and then dried thoroughly at room temperature to obtain an evaluation sample plate. The reflectance of the sample plate to ultraviolet, visible, and near-infrared light was evaluated according to the following procedure.

An ultraviolet-visible near-infrared spectrophotometer (Solid Spec 3700) manufactured by Shimadzu Corporation was used as a reflectance measurement device to measure the reflection characteristics for ultraviolet light to near-infrared light (wavelength of 300 nm to 2500 nm) of the coated surface of the sample plate as reflectance (%). The measurement was performed using a 60 mmϕ integrating sphere and Spectralon as a standard white plate.

The obtained results are shown in Fig. 25. As shown in Fig. 25, it can be seen that the reflectance is 40% or higher at almost all wavelengths of ultraviolet light to near-infrared light.

In addition, it can be seen that the reflection effect of near-infrared rays indicates that a thermal insulation effect is imparted.

### [Example 25]

2 parts by weight of the hollow resin particles (particles (9)) obtained in Example 9 and 20 parts by weight of a commercially available acrylic water-based glossy paint (trade name "Super Hit" manufactured by Kanpe Hapio Co., Ltd.) were mixed together for 3 minutes and defoamed for 1 minute using a planetary stirring defoamer (Mazerustar KK-250 manufactured by Kurabo Industries Ltd.) to obtain a paint composition (9-2). The resulting paint composition (9-2) was applied onto an acrylonitrile-butadiene-styrene resin (ABS resin) plate using a coating device set with a 75 µm-clearance blade, and then dried to obtain a paint film (9-2).

### «Performance evaluation: Evaluation of matte properties»

The paint composition (9-2) obtained in Example 25 was sprayed onto a 3 mm thick acrylic plate to create a 50 um thick matte paint film. The obtained paint film showed no protrusions and had good matte properties.

### [Example 26]

7.5 parts by weight of the hollow resin particles (particles (9)) obtained in Example 9, 30 parts by weight of an acrylic resin (product name "Acrydic A811" manufactured by DIC Corporation), 10 parts by weight of a cross-linking agent (product name "VM-D" manufactured by DIC Corporation), and 50 parts by weight of butyl acetate as a solvent were mixed together for 3 minutes and deformed for 1 minute using a planetary stirring defoamer (Mazerustar KK-250 manufactured by Kurabo Industries Ltd.) to obtain a light diffusion resin composition (9).

The resulting light diffusion resin composition (9) was applied onto a 125 µm thick PET film using a coating device set with a 50 pm-clearance blade, and then dried at 70°C for 10 minutes to obtain a light diffusion film (9).

### «Performance evaluation: Evaluation of light diffusibility»

The total light transmittance and haze of the light diffusion film (9) obtained in Example 26 were measured using a haze meter (trade name "NDH 2000" manufactured by Nippon Denshoku Industries Co., Ltd.) according to JIS K 7361-1: 1997 and JIS K 7136: 2000, respectively. The higher the diffusibility of light transmitted through the light diffusion film (transmitted light), the higher the haze value.

As a result of the measurements, the haze and the total light transmittance were 40.4% and 82.1%, respectively, and thus it was recognized that the light diffusion film (9) obtained in Example 26 had excellent light diffusibility.

### [Industrial Applicability]

The hollow resin particles according to the embodiment of the present invention and the hollow resin particles obtained through the production method according to the embodiment of the present invention can be used for semiconductor materials and the like. The hollow resin particles according to the embodiment of the present invention and the hollow resin particles obtained through the production method according to the embodiment of the present invention can be applied to uses for, for example, resin compositions for a semiconductor member.

## Claims

1. A hollow resin particle comprising:
a shell portion; and
a hollow portion surrounded by the shell portion, wherein
the shell portion contains a polymer (P) having an ether structure represented by Formula (1) and a phosphate structure:

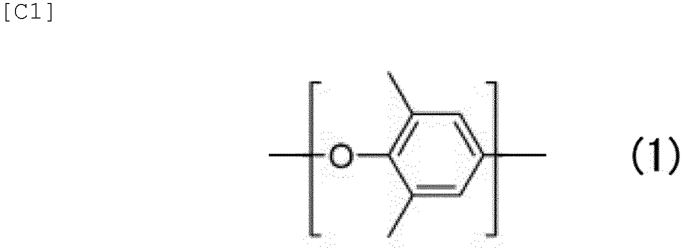

2. The hollow resin particle according to claim 1, wherein
the polymer (P) is a polymer (AM) obtained through a reaction of a compound (A) having the ether structure represented by Formula (1) and a radical-reactive group with a monomer (M) that reacts with the compound (A), and the monomer (M) contains a compound (B) having the phosphate structure and the radical-reactive group.

3. The hollow resin particle according to claim 2, wherein,
when a total amount of the compound (A) and the monomer (M) is set to 100 parts by weight, a ratio of the compound (A) to the monomer (M) (compound (A):monomer (M)) is (20 parts by weight to 80 parts by weight):(80 parts by weight to 20 parts by weight) in parts by weight.

4. The hollow resin particle according to claim 2, wherein,
when a total amount of the compound (A) and the monomer (M) is 100 parts by weight, the amount of the compound (B) based on the total amount is 0.0001 parts by weight to 0.0190 parts by weight.

5. The hollow resin particle according to claim 1, wherein
the polymer (P) includes elemental sulfur.

6. The hollow resin particle according to claim 5, wherein
a vinyl group residual rate is 15% or less.

7. The hollow resin particle according to claim 5, wherein
an exothermic onset temperature in the atmosphere is 290°C or higher.

8. The hollow resin particle according to claim 5, wherein
a sulfur atom content is 0.1 mass% to 3.0 mass%.

9. The hollow resin particle according to claim 5, wherein
the polymer (P) is a polymer obtained through a reaction of a thiol with a polymer (AM) obtained through a reaction of the compound (A) having the ether structure represented by Formula (1) and a radical-reactive group with the monomer (M) that reacts with the compound (A).

10. The hollow resin particle according to claim 9, wherein,
when a total amount of the compound (A) and the monomer (M) is set to 100 parts by weight, a ratio of the compound (A) to the monomer (M) (compound (A):monomer (M)) is (20 parts by weight to 80 parts by weight):(80 parts by weight to 20 parts by weight) in parts by weight.

11. The hollow resin particle according to any of claims 1 to 10, wherein
a volume average particle diameter is 0.1 um to 100 um.

12. The hollow resin particle according to any of claims 1 to 10, wherein
a coefficient of variation (CV value) of a particle diameter is 10% to 50%.

13. The hollow resin particle according to any of claims 1 to 10, wherein
a 5% weight reduction temperature of the hollow resin particle when the temperature is raised at 10°C/min in a nitrogen atmosphere is 290°C or higher.

14. The hollow resin particle according to any of claims 1 to 10, which is used in a resin composition for a semiconductor member.

15. The hollow resin particle according to any of claims 1 to 10, which is used in a paint composition.

16. The hollow resin particle according to any of claims 1 to 10, which is used in a thermal insulation resin composition.

17. The hollow resin particle according to any of claims 1 to 10, which is used in a light diffusion resin composition.

18. The hollow resin particle according to any of claims 1 to 10, which is used in a light diffusion film.

19. A resin composition for a semiconductor member, the resin composition comprising:
the hollow resin particle according to any of claims 1 to 10.

20. A paint composition comprising:
the hollow resin particle according to any of claims 1 to 10.

21. A thermal insulation resin composition comprising:
the hollow resin particle according to any of claims 1 to 10.

22. A light diffusion resin composition comprising:
the hollow resin particle according to any of claims 1 to 10.

23. A light diffusion film comprising:
the hollow resin particle according to any of claims 1 to 10.

24. A method for producing a hollow resin particle, the method comprising:
reacting 20 parts by weight to 80 parts by weight of a compound (A) having an ether structure represented by Formula (1) and a radical-reactive group with 80 parts by weight to 20 parts by weight of a monomer (M) that reacts with the compound (A) (a total amount of the compound (A) and the monomer (M) being set to 100 parts by weight) in an aqueous medium in the presence of a non-reactive solvent, wherein
the monomer (M) contains a compound (B) having a phosphate structure and the radical-reactive group:

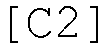

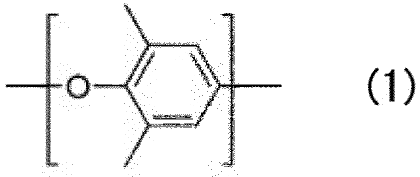

25. A method for producing a hollow resin particle, the method comprising:
(I) an oil phase preparation step of mixing 20 parts by weight to 80 parts by weight of a compound (A) having an ether structure represented by Formula (1) and a radical-reactive group and 80 parts by weight to 20 parts by weight of a monomer (M) that reacts with the compound (A) (a total amount of the compound (A) and the monomer (M) being set to 100 parts by weight) with a non-reactive solvent to prepare an oil phase;
(II) a suspension preparation step of adding the oil phase to an aqueous phase containing an aqueous medium and stirring the mixture to prepare a suspension; and
(III) a thiol-ene reaction step of adding a thiol to the suspension to cause a reaction and prepare a reactant:
